# EUROPEAN PATENT APPLICATION

(11) **EP 4 091 711 A1**
(43) Date of publication of application: **23.11.2022**
(21) Application number: 21175230.8
(22) Date of filing: 21.05.2021
(51) Int. Cl.: B01J 23/755, B01J 35/00, B01J 35/10, B01J 37/03, B01J 37/14, B01J 33/00

(54) **A HYDROGENATION CATALYST AND ITS PRECURSOR COMPRISING NI, AL, AND A SUPPORT MATERIAL COMPRISING SIO2**

(71) Applicant: BASF Corporation, Florham Park, NJ 07932 (US)
(72) Inventor: YARULINA, Irina, 67056 Ludwigshafen am Rhein (DE); KAMSMA, Gerda, 2454PK De Meern (NL); TERORDE, Robert, 2454PK De Meern (NL)
(74) Representative: Altmann Stößel Dick Patentanwälte PartG mbB

(57) **Abstract**

The present invention relates to a specific hydrogenation catalyst and to its precursor. Further, the present invention relates to methods for preparation of the hydrogenation catalyst and its precursor and use thereof. In particular, the specific hydrogenation catalyst and its precursor comprise Ni, Al, and a support material comprising SiO₂, wherein the Ni is supported on the support material, and wherein the precursor exhibits a specific peak maximum in the temperature programmed reduction.

## Description

### TECHNICAL FIELD

The present invention relates to a specific hydrogenation catalyst and to its precursor. Further, the present invention relates to methods for preparation of the hydrogenation catalyst and its precursor and use thereof. In particular, the specific hydrogenation catalyst and its precursor comprise Ni, Al, and a support material comprising SiO₂, wherein the Ni is supported on the support material, and wherein the precursor exhibits a specific peak maximum in the temperature programmed reduction.

### INTRODUCTION

Petrochemical resins find their applications in the field of adhesives (in particular non-wovens, coating, and construction). Petrochemical resins are produced by the polymerization of the C9 fraction upon distillation of the feed obtained from naphtha cracking. The resulting aromatic polymers are however relatively unstable to thermal and oxidative conditions, which will result in degradation, thereby reducing their adhesive performance. In order to overcome the instability of the C9 resin, a hydrogenation is normally performed. As such, the double bonds, the reason for the thermal and oxidative instability, are removed.

As regards the catalysts which are typically employed in the hydrogenation, these usually comprise nickel as the catalytically active component.

US 9045410 B2 relates to a catalyst comprising Ni and a solid silica support, wherein the catalyst has a specific pore volume of at least 0.4 ml/g and a peak maximum in the temperature programmed reduction within the range of 360-420 °C. The catalyst is particularly employed for the hydrogenation of an unsaturated fatty material.

WO 01/36093 A1 relates to a catalyst for the hydrogenation of hydrocarbon resins comprising an iron containing nickel catalyst supported on silica and alumina. WO 2004/035204 A1 concerns a catalyst for hydrogenation reactions, wherein the catalyst comprises nickel, silica, alumina, and magnesium. WO 2015/008247 A2 concerns a process and a catalyst for the hydrogenation of resins, wherein the catalyst comprises cobalt promoted nickel supported on silica-alumina. WO 2014/128204 A1 relates to the preparation of a catalyst comprising nickel and copper. The catalyst may be useful for hydrogenation and reductive amination.

Despite the achievements made for providing effective hydrogenation catalysts, in particular for the hydrogenation of petrochemical resins, there remains a need for catalysts of yet better performance, in particular with regard to their activity in the hydrogenation reaction.

### DETAILED DESCRIPTION

It was therefore an object of the present invention to provide an improved hydrogenation catalyst and an improved hydrogenation catalyst precursor, in particular with regard to its catalytic activity, as well as to provide a process for the production of such an improved hydrogenation catalyst and of its precursor.

Thus, it has surprisingly been found that the inventive process allows for the preparation of a hydrogenation catalyst precursor which can be converted to a hydrogenation catalyst having a greatly improved activity, in particular in the hydrogenation of petrochemical resins. In particular, it has unexpectedly been found that the inventive process allows for the preparation of a hydrogenation catalyst and its precursor, wherein the precursor particularly comprises Ni, Al, and a support material comprising SiO₂, wherein Ni is supported on the support material, and displays a specific peak maximum in the temperature programmed reduction, wherein the peak maximum in the temperature programmed reduction is preferably determined according to the present invention. In particular, said process can achieve a comparatively high dispersion of Ni in the hydrogenation catalyst and its precursor resulting in a surprisingly improved activity in hydrogenation. More specifically, it has surprisingly been found that the inventive process leads to a hydrogenation catalyst and its precursor showing a comparatively lower peak maximum in the temperature programmed reduction than a comparative precursor according to the prior art

Therefore, the present invention relates to a hydrogenation catalyst precursor comprising Ni, Al, and a support material comprising SiO₂, wherein the Ni is supported on the support material, wherein the hydrogenation catalyst precursor is more preferably obtainable and/or obtained according to the process of any one of the embodiments disclosed herein, and wherein the hydrogenation catalyst precursor exhibits a peak maximum in the temperature programmed reduction in the range of from 350 to 460 °C, wherein the peak maximum in the temperature programmed reduction is preferably determined according to Reference Example 5.

It is preferred that the hydrogenation catalyst precursor exhibits a peak maximum in the temperature programmed reduction in the range of from 355 to 450 °C, more preferably in the range of from 360 to 440 °C, more preferably in the range of from 365 to 430 °C, more preferably in the range of from 370 to 420 °C, more preferably in the range of from 375 to 415 °C, more preferably in the range of from 380 to 413 °C, more preferably in the range of from 381 to 412 °C, more preferably in the range of from 382 to 411 °C, more preferably in the range of from 383 to 410 °C, wherein the peak maximum in the temperature programmed reduction is preferably determined according to Reference Example 5.

It is preferred that at least part of the Al comprised in the hydrogenation catalyst precursor is supported on the support material, wherein more preferably from greater than 0 to 100 mol-%, more preferably from 50 to 100 mol-%, more preferably from 90 to 100 mol-%, of the Al is supported on the support material, based on 100 mol-% of the Al comprised in the hydrogenation precursor catalyst.

It is preferred that the support material comprising SiO₂ comprised in the hydrogenation catalyst precursor further comprises at least part of the Al comprised in the hydrogenation catalyst precursor, wherein the support material comprising SiO₂ comprises from 0 to 100 mol-%, more preferably from 0 to less than 50 mol-%, more preferably from 0 to less than 10 mol-%, of the Al comprised in the hydrogenation catalyst precursor, based on 100 mol-% of the Al comprised in the hydrogenation precursor catalyst.

It is preferred that the support material comprising SiO₂ comprised in the hydrogenation catalyst precursor further comprises H, wherein the support material comprising SiO₂ more preferably comprises from 90 to 100 weight-%, preferably from 95 to 100 weight-%, more preferably from 99 to 100 weight-%, of SiO₂, H, and optionally Al, based on the weight of the support material, wherein the support material comprising SiO₂ more preferably essentially consists of SiO₂, H, and optionally Al.

It is preferred that the support material comprising SiO₂ comprised in the hydrogenation catalyst precursor is selected from the group consisting of silica, silica-alumina, silica-titania, and silica-zirconia, including mixtures of two or more thereof, wherein the support material comprising SiO₂ more preferably comprises silica or silica-alumina, wherein more preferably the support material comprising SiO₂ preferably consists of silica or silica-alumina.

It is preferred that the support material comprising SiO₂ comprised in the hydrogenation catalyst precursor further comprises one or more of H, Al, Ti, and Zr, preferably Al, more preferably Al and H, wherein the support material comprising SiO₂ and further comprising one or more of H, Al, Ti, and Zr, more preferably comprises from 80 to 99 weight-%, more preferably from 85 to 98 weight-%, more preferably from 90 to 95 weight-%, of SiO₂, calculated as SiO₂, based on the weight of said support material, wherein the support material comprising SiO₂ further comprises H and one or more of Al, Ti, and Zr, more preferably comprises from 1 to 20 weight-%, more preferably from 2 to 15 weight-%, more preferably from 5 to 10 weight-%, of H, calculated as elemental H, and the one or more of Al, Ti, Zr, calculated as the respective oxide, preferably Al, calculated as Al₂O₃, based on the weight of said support material.

It is preferred that the hydrogenation catalyst precursor exhibits a molar ratio Ni:AI of Ni, calculated as elemental Ni, to Al, calculated as elemental Al, in the range of from 5:1 to 200:1, more preferably in the range of from 5:1 to 100:1, more preferably in the range of from 5:1 to 65:1, more preferably in the range of from 20:1 to 60:1, more preferably in the range of from 22:1 to 55:1, more preferably in the range of from 25:1 to 45:1, more preferably in the range of from 29:1 to 40:1, more preferably in the range of from 30:1 to 37:1, more preferably in the range of from 32:1 to 35:1.

It is preferred that the hydrogenation catalyst precursor exhibits a molar ratio Ni:Si of Ni, calculated as elemental Ni, to Si, calculated as elemental Si, comprised in the support material, in the range of from 0.1:1 to 5.00:1, more preferably in the range of from 0.50:1 to 2.50:1, more preferably in the range of from 0.70:1 to 2.00:1, more preferably in the range of from 0.80:1 to 1.50:1, more preferably in the range of from 0.90:1 to 1.20:1, more preferably in the range of from 0.94:1 to 1.10:1, more preferably in the range of from 0.95:1 to 1.00:1.

It is preferred that the hydrogenation catalyst precursor exhibits a molar ratio Si:Al of Si, calculated as elemental Si, comprised in the support material, to Al, calculated as elemental Al, in the range of from 6:1 to 70:1, more preferably in the range of from 11:1 to 61:1, more preferably in the range of from 17:1 to 53:1, more preferably in the range of from 26:1 to 45:1, more preferably in the range of from 31:1 to 39:1, more preferably in the range of from 34:1 to 36:1.

It is preferred that from 90 to 100 mol-%, more preferably from 95 to 100 mol-%, more preferably from 99 to 100 mol-%, more preferably from 99.9 to 100 mol-%, of the Ni comprised in the hydrogenation catalyst precursor are in oxidation state +2.

It is preferred that the hydrogenation catalyst precursor comprises from 15 to 60 weight-%, more preferably from 15 to 50 weight-%, more preferably from 25 to 50 weight-%, more preferably from 30 to 45 weight-%, more preferably from 33 to 42 weight-%, of Ni, calculated as elemental Ni, based on the weight of the hydrogenation catalyst precursor.

It is preferred that the hydrogenation catalyst precursor comprises from 0.3 to 2.0 weight-%, more preferably from 0.5 to 1.6 weight-%, more preferably from 0.57 to 1.4 weight-%, of Al, calculated as Al₂O₃, based on the weight of the hydrogenation catalyst precursor.

It is preferred that the hydrogenation catalyst precursor comprises from 30.0 to 52 weight-%, more preferably from 34.5 to 47 weight-%, more preferably from 35.2 to 44 weight-%, of Si, calculated as SiO₂, based on the weight of the hydrogenation catalyst precursor.

It is preferred that the hydrogenation catalyst precursor comprises equal to or less than 1 weight-%, more preferably equal to or less than 0.1 weight-%, more preferably equal to or less than 0.09 weight-%, of Na, calculated as elemental Na, based on the weight of the hydrogenation catalyst precursor.

According to a first alternative, the hydrogenation catalyst precursor is characterized by the following embodiments, wherein the hydrogenation catalyst precursor is preferably calcined.

It is preferred that the hydrogenation catalyst precursor exhibits a total intrusion volume in the range of from 0.3 to 5.0 cm³/g, more preferably in the range of from 0.75 to 2.5 cm³/g, more preferably in the range of from 1.0 to 1.6 cm³/g, more preferably in the range of from 1.1 to 1.5 cm³/g, wherein the total intrusion volume is preferably determined via Hg intrusion, wherein the total intrusion volume is more preferably determined according to Reference Example 1.

It is preferred that the hydrogenation catalyst precursor exhibits a total pore volume in the range of from 0.20 to 1.50 cm³/g, more preferably in the range of from 0.30 to 1.00 cm³/g, more preferably in the range of from 0.35 to 0.75 cm³/g, more preferably in the range of from 0.40 to 0.70 cm³/g, more preferably in the range of from 0.43 to 0.65 cm³/g, more preferably in the range of from 0.45 to 0.65 cm³/g, wherein the total pore volume is preferably determined via N₂ adsorption, wherein the total pore volume is more preferably determined according to Reference Example 2.

It is preferred that the hydrogenation catalyst precursor exhibits a hydrogen adsorption capacity in the range of from 17.0 to 31.0 cm³/g, more preferably in the range of from 19.0 to 29.0 cm³/g, more preferably in the range of from 21.0 to 28.1 cm³/g, more preferably in the range of from 22.1 to 27.2 cm³/g, more preferably in the range of from 23.0 to 26.5 cm³/g, wherein the hydrogen adsorption capacity is preferably determined according to Reference Example 4.

It is preferred that the hydrogenation catalyst precursor exhibits a BET specific surface area in the range of from 100 to 500 m²/g, more preferably of from 200 to 400 m²/g, more preferably of from 230 to 350 m²/g, wherein the BET surface area is preferably determined according to ISO 9277:2010.

It is preferred that the hydrogenation catalyst precursor comprises from 30 to 50 weight-%, more preferably from 35 to 45 weight-%, more preferably from 38 to 42 weight-%, of Ni, calculated as elemental Ni, based on the weight of the hydrogenation catalyst precursor, wherein the hydrogenation catalyst precursor is preferably a calcined hydrogenation catalyst precursor.

It is preferred that the hydrogenation catalyst precursor comprises from 0.3 to 2.0 weight-%, more preferably from 0.5 to 1.6 weight-%, more preferably from 0.7 to 1.4 weight-%, of Al, calculated as Al₂O₃, based on the weight of the hydrogenation catalyst precursor, wherein the hydrogenation catalyst precursor is preferably a calcined hydrogenation catalyst precursor.

It is preferred that the hydrogenation catalyst precursor comprises from 32 to 52 weight-%, more preferably from 37 to 47 weight-%, more preferably from 40 to 44 weight-%, of Si, calculated as SiO₂, based on the weight of the hydrogenation catalyst precursor, wherein the hydrogenation catalyst precursor is preferably a calcined hydrogenation catalyst precursor.

It is preferred that the hydrogenation catalyst precursor comprises equal to or less than 1 weight-%, more preferably equal to or less than 0.1 weight-%, more preferably equal to or less than 0.09 weight-%, of Na, calculated as elemental Na, based on the weight of the hydrogenation catalyst precursor, wherein the hydrogenation catalyst precursor is preferably a calcined hydrogenation catalyst precursor.

It is preferred that from 90 to 100 mol-%, preferably from 95 to 100 mol-%, more preferably from 99 to 100 mol-%, more preferably from 99.9 to 100 mol-%, of the Ni comprised in the hydrogenation catalyst precursor are present as NiO.

It is preferred that the hydrogenation catalyst precursor is a calcined hydrogenation catalyst precursor, wherein calcining has more preferably been performed in a gas atmosphere having a temperature in the range of from 300 to 1000 °C, more preferably in the range of from 325 to 750 °C, more preferably in the range of from 350 to 500 °C, more preferably in the range of from 370 to 380 °C, wherein the gas atmosphere more preferably comprised, more preferably consisted of, one or more of oxygen and nitrogen, more preferably air, wherein calcining more preferably was performed for 0.5 to 8 h, more preferably for 0.75 to 4 h, more preferably for 1 to 2 h.

According to a second alternative, the hydrogenation catalyst precursor is characterized by the following embodiments, wherein the hydrogenation catalyst precursor is preferably not calcined.

It is preferred that the hydrogenation catalyst precursor exhibits a loose apparent bulk density in the range of from 0.10 to 1.00 kg/I, more preferably in the range of from 0.30 to 0.65 kg/I, more preferably in the range of from 0.35 to 0.57 kg/I, wherein the loose apparent bulk density is preferably determined according to Reference Example 6.

It is preferred that the hydrogenation catalyst precursor comprises from 25 to 44 weight-%, more preferably from 30 to 39 weight-%, more preferably from 33 to 36 weight-%, of Ni, calculated as elemental Ni, based on the weight of the hydrogenation catalyst precursor, wherein the hydrogenation catalyst precursor is preferably a dried hydrogenation catalyst precursor.

It is preferred that the hydrogenation catalyst precursor comprises from 0.30 to 1.40 weight-%, more preferably from 0.50 to 1.20 weight-%, more preferably from 0.57 to 1.11 weight-%, of Al, calculated as Al₂O₃, based on the weight of the hydrogenation catalyst precursor, wherein the hydrogenation catalyst precursor is preferably a dried hydrogenation catalyst precursor.

It is preferred that the hydrogenation catalyst precursor comprises from 30.0 to 42.0 weight-%, more preferably from 34.5 to 38.5 weight-%, more preferably from 35.2 to 37.8 weight-%, of Si, calculated as SiO₂, based on the weight of the hydrogenation catalyst precursor, wherein the hydrogenation catalyst precursor is preferably a dried hydrogenation catalyst precursor.

It is preferred that the hydrogenation catalyst precursor comprises equal to or less than 1 weight-%, more preferably equal to or less than 0.1 weight-%, more preferably equal to or less than 0.09 weight-%, of Na, calculated as elemental Na, based on the weight of the hydrogenation catalyst precursor, wherein the hydrogenation catalyst precursor is preferably a dried hydrogenation catalyst precursor.

It is preferred that the hydrogenation catalyst precursor is dried. In this connection, two different options are particularly feasible. According to a first option, it is preferred that the hydrogenation catalyst precursor is a dried hydrogenation catalyst precursor, wherein drying has more preferably been performed in a gas atmosphere having a temperature in the range of from 90 to 130 °C, preferably in the range of from 100 to 120 °C, more preferably in the range of from 105 to 115 °C, wherein the gas atmosphere more preferably comprised, more preferably consisted of, one or more of oxygen and nitrogen, more preferably air, wherein drying more preferably was performed for 1 to 24 h, more preferably for 3 to 15 h, more preferably for 5 to 12, more preferably for 8 to 10 h. According to a second option, it is preferred that the hydrogenation catalyst precursor is a dried hydrogenation catalyst precursor, wherein drying has more preferably been performed by flash-drying or spray-drying, wherein drying has preferably been performed at an outlet temperature in the range of from 100 to 140 °C, more preferably in the range of from 110 to 130 °C, more preferably in the range of from 115 to 125 °C, wherein drying more preferably was performed for 1 to 30 s, more preferably for 1 to 20 s, more preferably for 1 to 10 s.

It is preferred that the hydrogenation catalyst precursor according to the embodiments as disclosed herein, and also according to the first and second alternatives as disclosed herein, is shaped, wherein the hydrogenation catalyst precursor is preferably in the form of an extrudate or a tablet.

Further, the present invention relates to a process for preparation of a hydrogenation catalyst precursor according to any one of embodiments 1 to 33, the process comprising
(1) preparing a first aqueous mixture (M1) comprising a support material comprising SiO₂;
(2) preparing a second aqueous solution (S2) comprising one or more Ni containing compounds;
(3) preparing a third aqueous solution (S3) comprising one or more bases;
   wherein the first aqueous mixture (M1), the second aqueous solution (S2) or the third aqueous solution (S3) comprises one or more Al containing compounds;
(4) feeding solutions S2 and S3 into mixture M1 for supporting Ni and Al on the support material, wherein the resulting mixture has a pH in the range of from 7.1 to 8.4;
(5) isolating the hydrogenation catalyst precursor from the mixture obtained in (4).

It is preferred that the first aqueous mixture (M1) according to (1) of the process comprises the one or more Al containing compounds.

It is preferred that the pH of the resulting mixture obtained in (4) of the process is in the range of from 7.1 to 8.1, more preferably of from 7.2 to 7.9, more preferably of from 7.3 to 7.8, and more preferably of from 7.4 to 7.7.

It is preferred that the one or more bases in the third aqueous solution (S3) according to (3) of the process comprise one or more polybasic salts, more preferably one or more polybasic salts selected from the group consisting of dibasic, tribasic, and tetrabasic salts, including mixtures of two or more thereof, more preferably from the group consisting of dibasic and tribasic salts, including mixtures of two or more thereof, wherein more preferably the one or more bases comprise one or more dibasic and/or one or more tribasic salts, and more preferably one or more dibasic salts, wherein more preferably the one or more bases consist of one or more dibasic and/or one or more tribasic salts, and more preferably of one or more dibasic salts.

In the case where the one or more bases in the third aqueous solution (S3) according to (3) of the process comprise one or more polybasic salts, it is preferred that the one or more cations of the one or more polybasic salts is selected from the group consisting of alkali and alkaline earth metals, including mixtures and/or combinations of two or more thereof, more preferably from the group consisting of alkali metals, including mixtures and/or combinations of two or more thereof, more preferably from the group consisting of Li, Na, K, Rb, and Cs, including mixtures and/or combinations of two or more thereof, more preferably from the group consisting of Li, Na, and K, including mixtures and/or combinations of two or more thereof, wherein more preferably the one or more cations of the one or more polybasic salts is Na and/or K, preferably Na.

It is preferred that the one or more bases in the third aqueous solution (S3) according to (3) of the process are selected from the group consisting of inorganic and organic bases, more preferably from the group of inorganic bases, wherein preferably the one or more bases are selected from the group consisting of hydroxides, carbonates, aluminates, and mixtures of two or more thereof, more preferably from the group consisting of alkali metal hydroxides, alkali metal carbonates, alkali metal aluminates, and mixtures of two or more thereof, more preferably from the group consisting of alkali metal carbonates, alkali metal aluminates, and mixtures of two or more thereof,
wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
and wherein more preferably the one or more bases comprise sodium carbonate and/or sodium aluminate, preferably sodium carbonate, wherein more preferably the one or more bases are sodium carbonate and/or sodium aluminate, preferably sodium carbonate.

It is preferred that the one or more Ni containing compounds in the second aqueous solution (S2) according to (2) of the process are one or more Ni salts, more preferably one or more Ni(ll) salts, wherein the anion of the one or more Ni salts is preferably selected from the group consisting of halides, carbonate, hydrogencarbonate, sulfate, hydrogensulfate, hydroxide, nitrate, phosphate, hydogenphosphate, dihydrogenphosphate, acetate, and mixtures of two or more thereof, more preferably from the group consisting of chloride, bromide, fluoride, hydrogencarbonate, hydrogensulfate, nitrate, dihydrogenphosphate, acetate, and mixtures of two or more thereof,
more preferably from the group consisting of chloride, fluoride, nitrate, acetate, and combinations of two or more thereof, wherein more preferably the anion of the one or more nickel salts is chloride and/or nitrate, preferably chloride,
and wherein more preferably the one or more Ni containing compounds comprise nickel(II) chloride, wherein more preferably the one or more Ni containing compounds is nickel(II) chloride.

It is preferred that the support material comprising SiO₂ in the first aqueous mixture (M1) according to (1) of the process further comprises H, wherein said support material more preferably comprises from 90 to 100 weight-%, preferably from 95 to 100 weight-%, more preferably from 99 to 100 weight-%, of SiO₂ and H, based on the weight of the support material, wherein said support material more preferably essentially consists of SiO₂ and H.

It is preferred that the support material comprising SiO₂ in the first aqueous mixture (M1) according to (1) of the process is selected from the group consisting of silica, silica-alumina, silica-titania, and silica-zirconia, including mixtures of two or more thereof, wherein the support material comprising SiO₂ more preferably comprises silica, wherein more preferably the support material comprising SiO₂ consists of silica.

It is preferred that the support material comprising SiO₂ in the first aqueous mixture (M1) according to (1) of the process further comprises H and one or more of Al, Ti, and Zr, preferably Al, wherein the support material comprising SiO₂ and further comprising H and one or more of Al, Ti, and Zr, preferably comprises from 80 to 99 weight-%, more preferably from 85 to 99 weight-%, more preferably from 90 to 99 weight-%, of SiO₂, calculated as SiO₂, based on the weight of said support material, wherein the support material comprising SiO₂ and further comprising H and one or more of Al, Ti, and Zr, more preferably comprises from 0.1 to 10 weight-%, more preferably from 0.20 to 7.5 weight-%, more preferably from 0.25 to 5 weight-%, of H, calculated as elemental H, and the one or more of Al, Ti, Zr, calculated as the respective oxide, preferably Al, calculated as Al₂O₃, based on the weight of said support material.

It is preferred that the support material comprising SiO₂ in the first aqueous mixture (M1) according to (1) of the process is porous, more preferably highly porous,
wherein the support material comprising SiO₂ preferably exhibits a pore volume of at least 0.4 ml/g, more preferably in the range of from 0.4 to 5.0 ml/g, more preferably in the range of from 0.6 to 4.0 ml/g, more preferably in the range of from 1.0 to 3.5 ml/g, more preferably in the range of from 1.3 to 2.5 ml/g, more preferably in the range of from 1.5 to 2.0 ml/g, more preferably in the range of from 1.6 to 1.8 ml/g, wherein the total pore volume is preferably determined via N₂ adsorption, wherein the pore volume is preferably determined according to Reference Example 2.

It is preferred that the one or more Al containing compounds comprised in the first aqueous mixture (M1), the second aqueous solution (S2) or the third aqueous solution (S3) of the process are selected from the group consisting of aluminates, aluminum salts, and mixtures thereof, more preferably from the group consisting of aluminates, more preferably from the group consisting of aluminate salts, more preferably from the group consisting of alkali metal aluminates, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
and wherein more preferably the one or more Al containing compounds comprise sodium aluminate, wherein more preferably the one or more Al containing compounds is sodium aluminate.

In the case where the one or more Al containing compounds comprised in the first aqueous mixture (M1), the second aqueous solution (S2) or the third aqueous solution (S3) of the process are selected from the group consisting of aluminates, aluminum salts, and mixtures thereof, it is preferred that the one or more Al containing compounds are selected from the group consisting of aluminum salts, wherein the anion of the one or more aluminum salts is more preferably selected from the group consisting of halides, sulfate, hydroxide, nitrate, and mixtures of two or more thereof, more preferably from the group consisting of chloride, fluoride, sulfate, hydroxide, nitrate, and mixtures of two or more thereof, wherein more preferably the anion of the one or more aluminum salts is chloride and/or sulfate, preferably chloride,
and wherein more preferably the one or more Al containing compounds comprise aluminum chloride, wherein more preferably the one or more Al containing compounds are aluminum chloride.

It is preferred that the concentration of the one or more bases in the third aqueous solution (S3) according to (3) of the process is in the range of from 1.0 to 3.0 mol/l, more preferably in the range of from 1.5 to 2.5 mol/l, more preferably in the range of from 1.8 to 2.2 mol/l.

It is preferred that the concentration of the one or more Ni containing compounds in the second aqueous solution (S2) according to (2) of the process is in the range of from 0.7 to 2.4 mol/l, more preferably in the range of from 1.2 to 1.9 mol/l, more preferably in the range of from 1.5 to 1.6 mol/l.

It is preferred that the amount of the silica in the first aqueous mixture (M1) according to (1) of the process is in the range of from 0.3 to 1.4 mol/l, more preferably in the range of from 0.6 to 1.1 mol/l, more preferably in the range of from 0.8 to 0.9 mol/l.

It is preferred that the concentration of the one or more Al containing compounds comprised in the first aqueous mixture (M1), the second aqueous solution (S2) or the third aqueous solution (S3) of the process is in the range of from 0.001 to 0.15 mol/l, more preferably in the range of from 0.005 to 0.13 mol/l, more preferably in the range of from 0.01 to 0.11 mol/l, more preferably in the range of from 0.02 to 0.10 mol/l, more preferably in the range of from 0.03 to 0.09 mol/l.

It is preferred that the ratio S2 : M1 of the total volume of the solution S2 to the total volume of the mixture M1 into which solution S2 is fed is comprised in the range of from 0.1:1 to 1.0:1, more preferably in the range of from 0.3:1 to 0.7:1, more preferably in the range of from 0.4:1 to 0.6:1.

It is preferred that the ratio S2 : S3 of the total volume of the solution S2 to the total volume of the solution S3 which are both fed into the mixture M1 is comprised in the range of from 0.2:1 to 2.0:1, preferably in the range of from 0.7:1 to 1.4:1, more preferably in the range of from 0.8:1 to 1.3:1.

It is preferred that the ratio M1 : S3 of the total volume of the mixture M1 to the total volume of the solution S3 which is fed into the mixture M1 is comprised in the range of from 1.0:1 to 3.5:1, more preferably in the range of from 1.6:1 to 2.6:1, more preferably in the range of from 1.7:1 to 2.4:1.

It is preferred that the feeding of the solutions of S2 and S3 into the mixture M1 in (4) of the process is conducted for a duration comprised in the range of from 1 min to 24 h, more preferably of from 0.05 to 12 h, more preferably of from 0.1 to 6 h, more preferably of from 0.25 to 3 h, more preferably of from 0.5 to 1.5 h, and more preferably of from 0.75 to 1.25 h.

It is preferred that the feeding of the solutions S2 and S3 into the mixture M1 in (4) of the process is conducted subsequently or simultaneously, preferably simultaneously.

It is preferred that the feeding of the solutions S2 and S3 into the mixture M1 in (4) of the process is conducted under agitation of the mixture M1, wherein the agitation of the mixture M1 is preferably achieved by stirring.

It is preferred that one or more of the mixture M1 and the solutions S2 and S3, are heated prior to the feeding of solutions S2 and S3 into the mixture M1 in (4) of the process, wherein one or more of the mixture M1 and the solutions S2 and S3, are more preferably heated prior to the feeding of solutions S2 and S3 into the mixture M1 in (4) at a temperature in the range of from 30 to 100 °C, preferably of from 40 to 90 °C, more preferably of from 50 to 80 °C, more preferably of from 55 to 75 °C, and more preferably of from 59 to 71 °C.

It is preferred that during the feeding in (4) of the process the resulting mixture is heated and/or maintained at a temperature in the range of from 30 to 100 °C, more preferably of from 40 to 90 °C, more preferably of from 50 to 80 °C, more preferably of from 55 to 75 °C, and more preferably of from 59 to 71 °C.

It is preferred that the process further comprises
(6) washing the hydrogenation catalyst precursor obtained in (5);
   and
(7) drying the hydrogenation catalyst precursor obtained in (5) or (6).

It is preferred that the process further comprises
(8) calcining the hydrogenation catalyst precursor obtained in (5), (6), or (7), to obtain a hydrogenation catalyst precursor,
   wherein preferably from 90 to 100 mol-%, more preferably from 95 to 100 mol-%, more preferably from 99 to 100 mol-%, of the Ni comprised in the hydrogenation catalyst precursor is present as NiO,
   wherein preferably from 90 to 100 mol-%, more preferably from 95 to 100 mol-%, more preferably from 99 to 100 mol-%, of the Al comprised in the hydrogenation catalyst precursor is present as Al₂O₃.

It is preferred that the process further comprises
(9) shaping the hydrogenation catalyst precursor obtained in (5), (6), (7), or (8) to obtain a hydrogenation catalyst precursor, wherein shaping preferably comprises extruding and/or tableting.

Yet further, the present invention relates to a hydrogenation catalyst precursor obtainable and/or obtained according to the process of any one of the embodiments disclosed herein, preferably according to a process comprising process steps (6) and (7) and optionally (8) as disclosed herein, more preferably according to a process comprising process steps (6) and (7) as disclosed herein.

Yet further, the present invention relates to a process for the preparation of a hydrogenation catalyst, comprising
(i) providing a hydrogenation catalyst precursor according to any one of the embodiments disclosed herein,
(ii) reducing the hydrogenation catalyst precursor provided in (i) in a gas atmosphere comprising hydrogen, obtaining the hydrogenation catalyst.

It is preferred that reduction in (ii) of the process is conducted at a temperature of the gas atmosphere in the range of from 200 to 500 °C, more preferably in the range of from 300 to 470 °C, more preferably in the range of from 350 to 450 °C, more preferably in the range of from 400 to 440 °C, more preferably in the range of from 420 to 430 °C.

It is preferred that reduction in (ii) of the process is conducted for a duration in the range of from 0.25 to 5 h, more preferably in the range of from 0.5 to 4 h, more preferably in the range of from 1 to 3.5 h, more preferably in the range of from 1.25 to 3 h, more preferably in the range of from 1.5 to 2.5 h, more preferably in the range of from 1.75 to 2.25 h.

It is preferred that the process further comprises
(iii) passivating the hydrogenation catalyst obtained in (ii) in a gas atmosphere comprising air.

In the case where the process further comprises (iii), it is preferred that passivation in (iii) is conducted at a temperature of the gas atmosphere in the range of from 75 to 150 °C, more preferably in the range of from 80 to 130 °C, more preferably in the range of from 85 to 120 °C, more preferably in the range of from 90 to 110 °C, more preferably in the range of from 95 to 105 °C.

Further in the case where the process further comprises (iii), it is preferred that passivation in (iii) is conducted for a duration in the range of from 1 to 8 h, preferably in the range of from 2 to 6 h, more preferably in the range of from 3 to 4 h, more preferably in the range o from 3.5 to 4 h.

It is preferred that the process further comprises
(iv) shaping the hydrogenation catalyst obtained in (ii), or (iii) to obtain a hydrogenation catalyst, wherein shaping preferably comprises extruding and/or tableting.

Yet further, the present invention relates to a hydrogenation catalyst comprising Ni, Si, Al, and O, obtainable and/or obtained according to the process of any one of the embodiments disclosed herein.

It is preferred that the hydrogenation catalyst exhibits a molar ratio Ni:AI of Ni, calculated as elemental Ni, to Al, calculated as elemental Al, in the range of from 20:1 to 200:1, more preferably in the range of from 20:1 to 100:1, more preferably in the range of from 20:1 to 60:1, more preferably in the range of from 22:1 to 55:1, more preferably in the range of from 25:1 to 45:1, more preferably in the range of from 29:1 to 40:1, more preferably in the range of from 30:1 to 37:1, more preferably in the range of from 32:1 to 35:1.

It is preferred that the hydrogenation catalyst exhibits a molar ratio Ni:Si of Ni, calculated as elemental Ni, to Si, calculated as elemental Si, in the range of from 0.50:1 to 2.50:1, more preferably in the range of from 0.70:1 to 2.00:1, more preferably in the range of from 0.80:1 to 1.50:1, more preferably in the range of from 0.90:1 to 1.20:1, more preferably in the range of from 0.94:1 to 1.10:1, more preferably in the range of from 0.95:1 to 1.00:1.

It is preferred that the hydrogenation catalyst exhibits a molar ratio Si:AI of Si, calculated as elemental Si, to Al, calculated as elemental Al, in the range of from 6:1 to 70:1, more preferably in the range of from 11:1 to 61:1, more preferably in the range of from 17:1 to 53:1, more preferably in the range of from 26:1 to 45:1, more preferably in the range of from 31:1 to 39:1, more preferably in the range of from 34:1 to 36:1.

It is preferred that the Ni comprised in the hydrogenation catalyst is in oxidation state 0 or +2.

It is preferred that from 30 to 100 mol-%, more preferably from 40 to 100 mol-%, more preferably from 50 to 100 mol-%, of the Ni comprised in the hydrogenation catalyst are in oxidation state 0.

It is preferred that from 0 to 50 mol-%, more preferably from 10 to 40 mol-%, more preferably from 20 to 30 mol-%, of the Ni comprised in the hydrogenation catalyst are in oxidation state +2.

It is preferred that the hydrogenation catalyst comprises from 38 to 54 weight-%, more preferably from 41 to 51 weight-%, more preferably from 43 to 49 weight-%, of Ni, calculated as elemental Ni, based on the weight of the hydrogenation catalyst.

It is preferred that the hydrogenation catalyst comprises from 0.6 to 1.9 weight-%, more preferably from 0.9 to 1.6 weight-%, more preferably from 1.1 to 1.4 weight-%, of Al, calculated as Al₂O₃, based on the weight of the hydrogenation catalyst.

It is preferred that the hydrogenation catalyst comprises from 41 to 57 weight-%, more preferably from 44 to 54 weight-%, more preferably from 46 to 52 weight-%, of Si, calculated as SiO₂, based on the weight of the hydrogenation catalyst.

It is preferred that the hydrogenation catalyst comprises equal to or less than 1 weight-%, more preferably equal to or less than 0.40 weight-%, more preferably equal to or less than 0.20 weight-%, of Na, calculated as elemental Na, based on the weight of the hydrogenation catalyst.

It is preferred that the hydrogenation catalyst is shaped, wherein the hydrogenation catalyst is preferably in the form of an extrudate or a tablet.

Yet further, the present invention relates to a process for the conversion, preferably for one or more of a hydrogenation, a dearomatization, and a desulfurization, of one or more unsaturated compounds, comprising
(A) providing one or more unsaturated compounds and a hydrogenation catalyst according to any one of the embodiments disclosed herein and/or a hydrogenation catalyst precursor according to any one of the embodiments disclosed herein, in a reaction zone; and
(B) contacting one or more of the one or more unsaturated compounds and a hydrogenation catalyst according to any one of the embodiments disclosed herein and/or a hydrogenation catalyst precursor according to any one of the embodiments disclosed herein provided in (A) with hydrogen at a temperature comprised in the range of from 100 to 400 °C.

It is preferred that the one or more unsaturated compounds are selected from the group consisting of polymer compounds, more preferably from the group consisting of petrochemical resins, wherein more preferably the one or more unsaturated compounds comprise the polymerization product of the C9 and/or C5 fraction obtained from the distillation of crude naphtha, wherein more preferably the one or more unsaturated compounds comprise one or more of an aldehyde group and a nitro group.

In the case where the one or more unsaturated compounds are selected from the group consisting of polymer compounds, it is preferred that the polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein more preferably the one or more monomers comprise one or more vinyltoluenes, dicyclopentadiene, indene, methylstyrene, styrene, and one or more methylindenes.

It is preferred that contacting in (B) is conducted at a temperature in the range of from 150 to 350°C, more preferably in the range of from 200 to 320°C, more preferably in the range of from 230 to 300°C, more preferably in the range of from 250 to 290°C, more preferably in the range of from 260 to 280°C, more preferably in the range of from 265 to 275°C.

It is preferred that contacting in (B) is conducted for a duration in the range of from 0.1 to 10 h, more preferably in the range of from 0.5 to 5 h , more preferably in the range of from 1 to 3 h, more preferably in the range of from 1.5 to 2.5 h, more preferably in the range of from 1.8 to 2.2 h.

It is preferred that contacting in (B) is conducted at a pressure in the range of from 5 to 200 bar, more preferably in the range of from 10 to 150 bar, more preferably in the range of from 30 to 120 bar, more preferably in the range of from 50 to 100 bar, more preferably in the range of from 70 to 90 bar, more preferably in the range of from 75 to 85 bar.

It is preferred that contacting in (B) is conducted under agitation, wherein the agitation is more preferably achieved by stirring.

It is preferred that the reaction zone in (A) contains 0.01 to 5 weight-%, more preferably 0.05 to 3 weight-%, more preferably 0.1 to 2.5 weight-%, more preferably 0.3 to 2.1 weight-%, more preferably 0.5 to 1.8 weight-%, more preferably 0.7 to 1.5 weight-%, more preferably 0.8 to 1.3 weight-%, more preferably of from 0.9 to 1.1 weight-%, of the hydrogenation catalyst precursor, based on 100 weight-% of the one or more unsaturated compounds.

It is preferred that the process is a continuous process or a batch process, wherein more preferably contacting in (B) is conducted under continuous and/or batch conditions, preferably under batch conditions.

It is preferred that the hydrogenation catalyst according to any one of the embodiments disclosed herein and/or the hydrogenation catalyst precursor according to any one of the embodiments disclosed herein is provided in a fixed bed in the reaction zone according to (A).

Yet further, the present invention relates to a use of a hydrogenation catalyst precursor according to any one of the embodiments disclosed herein, and/or of a hydrogenation catalyst according to any one of the embodiments disclosed herein, in one or more of a dearomatization, a desulfurization, preferably a desulfurization of petrochemical feedstocks, and a hydrogenation, preferably in hydrogenation of one or more unsaturated compounds, preferably of unsaturated polymer compounds, more preferably of petrochemical resins or petrochemical feedstocks, more preferably of unsaturated compounds which comprise a polymerization product of a C9 and/or C5 fraction obtained from distillation of crude naphtha, more preferably of functional groups comprising one or more of an aldehyde group and a nitro group.

It is preferred that the unsaturated polymer compounds are obtained from polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.

According to the present invention, it is preferred that a pH value is measured according to the international standard ISO 34-8 (International Standard ISO 34-8: Quantities and Units - Part 8: Physical Chemistry and Molecular Physics, Annex C (normative): pH. International Organization for Standardization, 1992). According to the present invention it is yet further preferred that the pH values as defined in the present application are determined in accordance with ISO 80000-9, Annex C, pH.

In the context of the present invention, the term "consists of" with regard to the weight-% of one or more components indicates the weight-% amount of said component(s) based on 100 weight-% of the entity in question. For example, the wording "wherein from 0 to 0.001 weight-% of the first coating consists of X" indicates that among the 100 weight-% of the components of which said coating consists of, 0 to 0.001 weight-% is X.

Furthermore, in the context of the present invention, a term "X is one or more of A, B and C", wherein X is a given feature and each of A, B and C stands for specific realization of said feature, is to be understood as disclosing that X is either A, or B, or C, or A and B, or A and C, or B and C, or A and B and C. In this regard, it is noted that the skilled person is capable of transfer to above abstract term to a distinct example, e.g. where X is a chemical element and A, B and C are distinct elements such as Li, Na, and K, or X is a temperature and A, B and C are distinct temperatures such as 10 °C, 20 °C, and 30 °C. In this regard, it is further noted that the skilled person is capable of extending the above term to less specific realizations of said feature, e.g. "X is one or more of A and B" disclosing that X is either A, or B, or A and B, or to more specific realizations of said feature, e.g. "X is one or more of A, B, C and D", disclosing that X is either A, or B, or C, or D, or A and B, or A and C, or A and D, or B and C, or B and D, or C and D, or A and B and C, or A and B and D, or B and C and D, or A and B and C and D.

The present invention is further illustrated by the following set of embodiments and combinations of embodiments resulting from the dependencies and back-references as indicated. In particular, it is noted that in each instance where a range of embodiments is mentioned, for example in the context of a term such as "any one of embodiments 1 to 4", every embodiment in this range is meant to be explicitly disclosed for the skilled person, i.e. the wording of this term is to be understood by the skilled person as being synonymous to "any one of embodiments 1, 2, 3, and 4".

Further, it is explicitly noted that the following set of embodiments is not the set of claims determining the extent of protection, but represents a suitably structured part of the description directed to general and preferred aspects of the present invention.
1. A hydrogenation catalyst precursor comprising Ni, Al, and a support material comprising SiO₂, wherein the Ni is supported on the support material, wherein the hydrogenation catalyst precursor is preferably obtainable and/or obtained according to the process of any one of embodiments 29 to 52, and wherein the hydrogenation catalyst precursor exhibits a peak maximum in the temperature programmed reduction in the range of from 350 to 460 °C, wherein the peak maximum in the temperature programmed reduction is preferably determined according to Reference Example 5.
2. The hydrogenation catalyst precursor according to embodiment 1, exhibiting a peak maximum in the temperature programmed reduction in the range of from 355 to 450 °C, preferably in the range of from 360 to 440 °C, more preferably in the range of from 365 to 430 °C, more preferably in the range of from 370 to 420 °C, more preferably in the range of from 375 to 415 °C, more preferably in the range of from 380 to 413 °C, more preferably in the range of from 381 to 412 °C, more preferably in the range of from 382 to 411 °C, more preferably in the range of from 383 to 410 °C, wherein the peak maximum in the temperature programmed reduction is preferably determined according to Reference Example 5.
3. The hydrogenation catalyst precursor according to embodiment 1 or 2, wherein at least part of the Al comprised in the hydrogenation catalyst precursor is supported on the support material, wherein preferably from greater than 0 to 100 mol-%, more preferably from 50 to 100 mol-%, more preferably from 90 to 100 mol-%, of the Al is supported on the support material, based on 100 mol-% of the Al comprised in the hydrogenation precursor catalyst.
4. The hydrogenation catalyst precursor according to any one of embodiments 1 to 3, wherein the support material comprising SiO₂ further comprises at least part of the Al comprised in the hydrogenation catalyst precursor, wherein the support material comprising SiO₂ comprises from 0 to 100 mol-%, preferably from 0 to less than 50 mol-%, more preferably from 0 to less than 10 mol-%, of the Al comprised in the hydrogenation catalyst precursor, based on 100 mol-% of the Al comprised in the hydrogenation precursor catalyst.
5. The hydrogenation catalyst precursor according to any one of embodiments 1 to 4, wherein the support material comprising SiO₂ further comprises H, wherein the support material comprising SiO₂ preferably comprises from 90 to 100 weight-%, preferably from 95 to 100 weight-%, more preferably from 99 to 100 weight-%, of SiO₂, H, and optionally Al, based on the weight of the support material, wherein the support material comprising SiO₂ more preferably essentially consists of SiO₂, H, and optionally Al.
6. The hydrogenation catalyst precursor according to any one of embodiments 1 to 5, wherein the support material comprising SiO₂ is selected from the group consisting of silica, silica-alumina, silica-titania, and silica-zirconia, including mixtures of two or more thereof, wherein the support material comprising SiO₂ preferably comprises silica or silica-alumina, wherein more preferably the support material comprising SiO₂ preferably consists of silica or silica-alumina.
7. The hydrogenation catalyst precursor according to any one of embodiments 1 to 6, wherein the support material comprising SiO₂ further comprises one or more of H, Al, Ti, and Zr, preferably Al, more preferably Al and H, wherein the support material comprising SiO₂ and further comprising one or more of H, Al, Ti, and Zr, preferably comprises from 80 to 99 weight-%, more preferably from 85 to 98 weight-%, more preferably from 90 to 95 weight-%, of SiO₂, calculated as SiO₂, based on the weight of said support material, wherein the support material comprising SiO₂ further comprises H and one or more of Al, Ti, and Zr, more preferably comprises from 1 to 20 weight-%, more preferably from 2 to 15 weight-%, more preferably from 5 to 10 weight-%, of H, calculated as elemental H, and the one or more of Al, Ti, Zr, calculated as the respective oxide, preferably Al, calculated as Al₂O₃, based on the weight of said support material.
8. The hydrogenation catalyst precursor according to any one of embodiments 1 to 7, wherein the hydrogenation catalyst precursor exhibits a molar ratio Ni:AI of Ni, calculated as elemental Ni, to Al, calculated as elemental Al, in the range of from 5:1 to 200:1, preferably in the range of from 5:1 to 100:1, more preferably in the range of from 5:1 to 65:1, more preferably in the range of from 20:1 to 60:1, more preferably in the range of from 22:1 to 55:1, more preferably in the range of from 25:1 to 45:1, more preferably in the range of from 29:1 to 40:1, more preferably in the range of from 30:1 to 37:1, more preferably in the range of from 32:1 to 35:1.
9. The hydrogenation catalyst precursor according to any one of embodiments 1 to 8, wherein the hydrogenation catalyst precursor exhibits a molar ratio Ni:Si of Ni, calculated as elemental Ni, to Si, calculated as elemental Si, comprised in the support material, in the range of from 0.1:1 to 5.00:1, preferably in the range of from 0.50:1 to 2.50:1, more preferably in the range of from 0.70:1 to 2.00:1, more preferably in the range of from 0.80:1 to 1.50:1, more preferably in the range of from 0.90:1 to 1.20:1, more preferably in the range of from 0.94:1 to 1.10:1, more preferably in the range of from 0.95:1 to 1.00:1.
10. The hydrogenation catalyst precursor according to any one of embodiments 1 to 9, wherein the hydrogenation catalyst precursor exhibits a molar ratio Si:Al of Si, calculated as elemental Si, comprised in the support material, to Al, calculated as elemental Al, in the range of from 6:1 to 70:1, preferably in the range of from 11:1 to 61:1, more preferably in the range of from 17:1 to 53:1, more preferably in the range of from 26:1 to 45:1, more preferably in the range of from 31:1 to 39:1, more preferably in the range of from 34:1 to 36:1.
11. The hydrogenation catalyst precursor according to any one of embodiments 1 to 10, wherein from 90 to 100 mol-%, preferably from 95 to 100 mol-%, more preferably from 99 to 100 mol-%, more preferably from 99.9 to 100 mol-%, of the Ni are in oxidation state +2.
12. The hydrogenation catalyst precursor according to any one of embodiments 1 to 11, comprising from 15 to 60 weight-%, preferably from 15 to 50 weight-%, more preferably from 25 to 50 weight-%, more preferably from 30 to 45 weight-%, more preferably from 33 to 42 weight-%, of Ni, calculated as elemental Ni, based on the weight of the hydrogenation catalyst precursor.
13. The hydrogenation catalyst precursor according to any one of embodiments 1 to 12, comprising from 0.3 to 2.0 weight-%, preferably from 0.5 to 1.6 weight-%, more preferably from 0.57 to 1.4 weight-%, of Al, calculated as Al₂O₃, based on the weight of the hydrogenation catalyst precursor.
14. The hydrogenation catalyst precursor according to any one of embodiments 1 to 13, comprising from 30.0 to 52 weight-%, preferably from 34.5 to 47 weight-%, more preferably from 35.2 to 44 weight-%, of Si, calculated as SiO₂, based on the weight of the hydrogenation catalyst precursor.
15. The hydrogenation catalyst precursor according to any one of embodiments 1 to 14, comprising equal to or less than 1 weight-%, preferably equal to or less than 0.1 weight-%, more preferably equal to or less than 0.09 weight-%, of Na, calculated as elemental Na, based on the weight of the hydrogenation catalyst precursor.
16. The hydrogenation catalyst precursor according to any one of embodiments 1 to 15,
   wherein the hydrogenation catalyst precursor exhibits a total intrusion volume in the range of from 0.3 to 5.0 cm³/g, preferably in the range of from 0.75 to 2.5 cm³/g, more preferably in the range of from 1.0 to 1.6 cm³/g, more preferably in the range of from 1.1 to 1.5 cm³/g, wherein the total intrusion volume is preferably determined via Hg intrusion, wherein the total intrusion volume is more preferably determined according to Reference Example 1.
17. The hydrogenation catalyst precursor according to any one of embodiments 1 to 16,
   wherein the hydrogenation catalyst precursor exhibits a total pore volume in the range of from 0.20 to 1.50 cm³/g, preferably in the range of from 0.30 to 1.00 cm³/g, more preferably in the range of from 0.35 to 0.75 cm³/g, more preferably in the range of from 0.40 to 0.70 cm³/g, more preferably in the range of from 0.43 to 0.65 cm³/g, more preferably in the range of from 0.45 to 0.65 cm³/g, wherein the total pore volume is preferably determined via N₂ adsorption, wherein the total pore volume is more preferably determined according to Reference Example 2.
18. The hydrogenation catalyst precursor according to any one of embodiments 1 to 17,
   wherein the hydrogenation catalyst precursor exhibits a hydrogen adsorption capacity in the range of from 17.0 to 31.0 cm³/g, preferably in the range of from 19.0 to 29.0 cm³/g, more preferably in the range of from 21.0 to 28.1 cm³/g, more preferably in the range of from 22.1 to 27.2 cm³/g, more preferably in the range of from 23.0 to 26.5 cm³/g, wherein the hydrogen adsorption capacity is preferably determined according to Reference Example 4.
19. The hydrogenation catalyst precursor according to any one of embodiments 1 to 18,
   wherein the hydrogenation catalyst precursor exhibits a BET specific surface area in the range of from 100 to 500 m²/g, preferably of from 200 to 400 m²/g, more preferably of from 230 to 350 m²/g, wherein the BET surface area is preferably determined according to ISO 9277:2010.
20. The hydrogenation catalyst precursor according to any one of embodiments 1 to 19, comprising from 30 to 50 weight-%, preferably from 35 to 45 weight-%, more preferably from 38 to 42 weight-%, of Ni, calculated as elemental Ni, based on the weight of the hydrogenation catalyst precursor, wherein the hydrogenation catalyst precursor is preferably a calcined hydrogenation catalyst precursor.
21. The hydrogenation catalyst precursor according to any one of embodiments 1 to 20, comprising from 0.3 to 2.0 weight-%, preferably from 0.5 to 1.6 weight-%, more preferably from 0.7 to 1.4 weight-%, of Al, calculated as Al₂O₃, based on the weight of the hydrogenation catalyst precursor, wherein the hydrogenation catalyst precursor is preferably a calcined hydrogenation catalyst precursor.
22. The hydrogenation catalyst precursor according to any one of embodiments 1 to 21, comprising from 32 to 52 weight-%, preferably from 37 to 47 weight-%, more preferably from 40 to 44 weight-%, of Si, calculated as SiO₂, based on the weight of the hydrogenation catalyst precursor, wherein the hydrogenation catalyst precursor is preferably a calcined hydrogenation catalyst precursor.
23. The hydrogenation catalyst precursor according to any one of embodiments 1 to 22, comprising equal to or less than 1 weight-%, preferably equal to or less than 0.1 weight-%, more preferably equal to or less than 0.09 weight-%, of Na, calculated as elemental Na, based on the weight of the hydrogenation catalyst precursor, wherein the hydrogenation catalyst precursor is preferably a calcined hydrogenation catalyst precursor.
24. The hydrogenation catalyst precursor according to any one of embodiments 1 to 23, preferably according to any one of embodiments 20 to 23, wherein from 90 to 100 mol-%, preferably from 95 to 100 mol-%, more preferably from 99 to 100 mol-%, more preferably from 99.9 to 100 mol-%, of the Ni are present as NiO.
25. The hydrogenation catalyst precursor according to any one of embodiments 1 to 24, preferably according to any one of embodiments 20 to 24, wherein the hydrogenation catalyst precursor is a calcined hydrogenation catalyst precursor, wherein calcining has preferably been performed in a gas atmosphere having a temperature in the range of from 300 to 1000 °C, more preferably in the range of from 325 to 750 °C, more preferably in the range of from 350 to 500 °C, more preferably in the range of from 370 to 380 °C, wherein the gas atmosphere more preferably comprised, more preferably consisted of, one or more of oxygen and nitrogen, more preferably air, wherein calcining more preferably was performed for 0.5 to 8 h, more preferably for 0.75 to 4 h, more preferably for 1 to 2 h.
26. The hydrogenation catalyst precursor according to any one of embodiments 1 to 15,
   wherein the hydrogenation catalyst precursor exhibits a loose apparent bulk density in the range of from 0.10 to 1.00 kg/I, preferably in the range of from 0.30 to 0.65 kg/I, more preferably in the range of from 0.35 to 0.57 kg/I, wherein the loose apparent bulk density is preferably determined according to Reference Example 6.
27. The hydrogenation catalyst precursor according to embodiment 26, comprising from 25 to 44 weight-%, preferably from 30 to 39 weight-%, more preferably from 33 to 36 weight-%, of Ni, calculated as elemental Ni, based on the weight of the hydrogenation catalyst precursor, wherein the hydrogenation catalyst precursor is preferably a dried hydrogenation catalyst precursor.
28. The hydrogenation catalyst precursor according to embodiment 26 or 27, comprising from 0.30 to 1.40 weight-%, preferably from 0.50 to 1.20 weight-%, more preferably from 0.57 to 1.11 weight-%, of Al, calculated as Al₂O₃, based on the weight of the hydrogenation catalyst precursor, wherein the hydrogenation catalyst precursor is preferably a dried hydrogenation catalyst precursor.
29. The hydrogenation catalyst precursor according to any one of embodiments 26 to 28, comprising from 30.0 to 42.0 weight-%, preferably from 34.5 to 38.5 weight-%, more preferably from 35.2 to 37.8 weight-%, of Si, calculated as SiO₂, based on the weight of the hydrogenation catalyst precursor, wherein the hydrogenation catalyst precursor is preferably a dried hydrogenation catalyst precursor.
30. The hydrogenation catalyst precursor according to any one of embodiments 26 to 29, comprising equal to or less than 1 weight-%, preferably equal to or less than 0.1 weight-%, more preferably equal to or less than 0.09 weight-%, of Na, calculated as elemental Na, based on the weight of the hydrogenation catalyst precursor, wherein the hydrogenation catalyst precursor is preferably a dried hydrogenation catalyst precursor.
31. The hydrogenation catalyst precursor according to any one of embodiments 26 to 30, wherein the hydrogenation catalyst precursor is a dried hydrogenation catalyst precursor, wherein drying has preferably been performed in a gas atmosphere having a temperature in the range of from 90 to 130 °C, preferably in the range of from 100 to 120 °C, more preferably in the range of from 105 to 115 °C, wherein the gas atmosphere more preferably comprised, more preferably consisted of, one or more of oxygen and nitrogen, more preferably air, wherein drying more preferably was performed for 1 to 24 h, more preferably for 3 to 15 h, more preferably for 5 to 12, more preferably for 8 to 10 h.
32. The hydrogenation catalyst precursor according to any one of embodiments 26 to 30, wherein the hydrogenation catalyst precursor is a dried hydrogenation catalyst precursor, wherein drying has preferably been performed by flash-drying or spray-drying, wherein drying has preferably been performed at an outlet temperature in the range of from 100 to 140 °C, more preferably in the range of from 110 to 130 °C, more preferably in the range of from 115 to 125 °C, wherein drying more preferably was performed for 1 to 30 s, more preferably for 1 to 20 s, more preferably for 1 to 10 s.
33. The hydrogenation catalyst precursor according to any one of embodiments 1 to 32 being shaped, preferably being in the form of an extrudate or a tablet.
34. A process for preparation of a hydrogenation catalyst precursor according to any one of embodiments 1 to 33, the process comprising
   (1) preparing a first aqueous mixture (M1) comprising a support material comprising SiO₂;
   (2) preparing a second aqueous solution (S2) comprising one or more Ni containing compounds;
   (3) preparing a third aqueous solution (S3) comprising one or more bases;
      wherein the first aqueous mixture (M1), the second aqueous solution (S2) or the third aqueous solution (S3) comprises one or more Al containing compounds;
   (4) feeding solutions S2 and S3 into mixture M1 for supporting Ni and Al on the support material, wherein the resulting mixture has a pH in the range of from 7.1 to 8.4;
   (5) isolating the hydrogenation catalyst precursor from the mixture obtained in (4).
35. The process of embodiment 34, wherein the first aqueous mixture (M1) comprises the one or more Al containing compounds.
36. The process of embodiment 34 or 35, wherein the pH of the resulting mixture obtained in (4) is in the range of from 7.1 to 8.1, preferably of from 7.2 to 7.9, more preferably of from 7.3 to 7.8, and more preferably of from 7.4 to 7.7.
37. The process of any one of embodiments 34 to 36, wherein the one or more bases in the third aqueous solution (S3) according to (3) comprise one or more polybasic salts, preferably one or more polybasic salts selected from the group consisting of dibasic, tribasic, and tetrabasic salts, including mixtures of two or more thereof, more preferably from the group consisting of dibasic and tribasic salts, including mixtures of two or more thereof, wherein more preferably the one or more bases comprise one or more dibasic and/or one or more tribasic salts, and more preferably one or more dibasic salts, wherein more preferably the one or more bases consist of one or more dibasic and/or one or more tribasic salts, and more preferably of one or more dibasic salts.
38. The process of embodiment 37, wherein the one or more cations of the one or more polybasic salts is selected from the group consisting of alkali and alkaline earth metals, including mixtures and/or combinations of two or more thereof, preferably from the group consisting of alkali metals, including mixtures and/or combinations of two or more thereof, more preferably from the group consisting of Li, Na, K, Rb, and Cs, including mixtures and/or combinations of two or more thereof, more preferably from the group consisting of Li, Na, and K, including mixtures and/or combinations of two or more thereof, wherein more preferably the one or more cations of the one or more polybasic salts is Na and/or K, preferably Na.
39. The process of any one of embodiments 34 to 38, wherein the one or more bases in the third aqueous solution (S3) according to (3) are selected from the group consisting of inorganic and organic bases, preferably from the group of inorganic bases, wherein preferably the one or more bases are selected from the group consisting of hydroxides, carbonates, aluminates, and mixtures of two or more thereof, more preferably from the group consisting of alkali metal hydroxides, alkali metal carbonates, alkali metal aluminates, and mixtures of two or more thereof, more preferably from the group consisting of alkali metal carbonates, alkali metal aluminates, and mixtures of two or more thereof,
   wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
   and wherein more preferably the one or more bases comprise sodium carbonate and/or sodium aluminate, preferably sodium carbonate, wherein more preferably the one or more bases are sodium carbonate and/or sodium aluminate, preferably sodium carbonate.
40. The process of any one of embodiments 34 to 39, wherein the one or more Ni containing compounds in the second aqueous solution (S2) according to (2) are one or more Ni salts, preferably one or more Ni(II) salts, wherein the anion of the one or more Ni salts is preferably selected from the group consisting of halides, carbonate, hydrogencarbonate, sulfate, hydrogensulfate, hydroxide, nitrate, phosphate, hydogenphosphate, dihydrogenphosphate, acetate, and mixtures of two or more thereof, more preferably from the group consisting of chloride, bromide, fluoride, hydrogencarbonate, hydrogensulfate, nitrate, dihydrogenphosphate, acetate, and mixtures of two or more thereof,
   more preferably from the group consisting of chloride, fluoride, nitrate, acetate, and combinations of two or more thereof, wherein more preferably the anion of the one or more nickel salts is chloride and/or nitrate, preferably chloride,
   and wherein more preferably the one or more Ni containing compounds comprise nickel(II) chloride, wherein more preferably the one or more Ni containing compounds is nickel(II) chloride.
41. The process of any one of embodiments 34 to 40, wherein the support material comprising SiO₂ in the first aqueous mixture (M1) according to (1) further comprises H, wherein said support material preferably comprises from 90 to 100 weight-%, preferably from 95 to 100 weight-%, more preferably from 99 to 100 weight-%, of SiO₂ and H, based on the weight of the support material, wherein said support material more preferably essentially consists of SiO₂ and H.
42. The process of any one of embodiments 34 to 41, wherein the support material comprising SiO₂ is selected from the group consisting of silica, silica-alumina, silica-titania, and silica-zirconia, including mixtures of two or more thereof, wherein the support material comprising SiO₂ preferably comprises silica, wherein more preferably the support material comprising SiO₂ consists of silica.
43. The process of any one of embodiments 34 to 42, wherein the support material comprising SiO₂ further comprises H and one or more of Al, Ti, and Zr, preferably Al, wherein the support material comprising SiO₂ and further comprising H and one or more of Al, Ti, and Zr, preferably comprises from 80 to 99 weight-%, more preferably from 85 to 99 weight-%, more preferably from 90 to 99 weight-%, of SiO₂, calculated as SiO₂, based on the weight of said support material, wherein the support material comprising SiO₂ and further comprising H and one or more of Al, Ti, and Zr, more preferably comprises from 0.1 to 10 weight-%, more preferably from 0.20 to 7.5 weight-%, more preferably from 0.25 to 5 weight-%, of H, calculated as elemental H, and the one or more of Al, Ti, Zr, calculated as the respective oxide, preferably Al, calculated as Al₂O₃, based on the weight of said support material.
44. The process of any one of embodiments 34 to 43, wherein the support material comprising SiO₂ is porous, preferably highly porous,
   wherein the support material comprising SiO₂ preferably exhibits a pore volume of at least 0.4 ml/g, more preferably in the range of from 0.4 to 5.0 ml/g, more preferably in the range of from 0.6 to 4.0 ml/g, more preferably in the range of from 1.0 to 3.5 ml/g, more preferably in the range of from 1.3 to 2.5 ml/g, more preferably in the range of from 1.5 to 2.0 ml/g, more preferably in the range of from 1.6 to 1.8 ml/g, wherein the total pore volume is preferably determined via N₂ adsorption, wherein the pore volume is preferably determined according to Reference Example 2.
45. The process of any one of embodiments 34 to 44, wherein the one or more Al containing compounds are selected from the group consisting of aluminates, aluminum salts, and mixtures thereof, preferably from the group consisting of aluminates, more preferably from the group consisting of aluminate salts, more preferably from the group consisting of alkali metal aluminates, wherein the alkali metal is preferably selected from the group consisting of Li, Na, K, Rb, Cs, and mixtures of two or more thereof, more preferably from the group consisting of Li, Na, K, and mixtures of two or more thereof, wherein more preferably the alkali metal is Na and/or K, preferably Na,
   and wherein more preferably the one or more Al containing compounds comprise sodium aluminate, wherein more preferably the one or more Al containing compounds is sodium aluminate.
46. The process of embodiment 45, wherein the one or more Al containing compounds are selected from the group consisting of aluminum salts, wherein the anion of the one or more aluminum salts is preferably selected from the group consisting of halides, sulfate, hydroxide, nitrate, and mixtures of two or more thereof, more preferably from the group consisting of chloride, fluoride, sulfate, hydroxide, nitrate, and mixtures of two or more thereof, wherein more preferably the anion of the one or more aluminum salts is chloride and/or sulfate, preferably chloride,
   and wherein more preferably the one or more Al containing compounds comprise aluminum chloride, wherein more preferably the one or more Al containing compounds are aluminum chloride.
47. The process of any one of embodiments 34 to 46, wherein the concentration of the one or more bases in the third aqueous solution (S3) according to (3) is in the range of from 1.0 to 3.0 mol/l, preferably in the range of from 1.5 to 2.5 mol/l, more preferably in the range of from 1.8 to 2.2 mol/l.
48. The process of any one of embodiments 34 to 47, wherein the concentration of the one or more Ni containing compounds in the second aqueous solution (S2) according to (2) is in the range of from 0.7 to 2.4 mol/l, preferably in the range of from 1.2 to 1.9 mol/l, more preferably in the range of from 1.5 to 1.6 mol/l.
49. The process of any one of embodiments 34 to 48, wherein the amount of the silica in the first aqueous mixture (M1) according to (1) is in the range of from 0.3 to 1.4 mol/l, preferably in the range of from 0.6 to 1.1 mol/l, more preferably in the range of from 0.8 to 0.9 mol/l.
50. The process of any one of embodiments 34 to 49, wherein the concentration of the one or more Al containing compounds is in the range of from 0.001 to 0.15 mol/l, preferably in the range of from 0.005 to 0.13 mol/l, more preferably in the range of from 0.01 to 0.11 mol/l, more preferably in the range of from 0.02 to 0.10 mol/l, more preferably in the range of from 0.03 to 0.09 mol/l.
51. The process of any one of embodiments 34 to 50, wherein the ratio S2 : M1 of the total volume of the solution S2 to the total volume of the mixture M1 into which solution S2 is fed is comprised in the range of from 0.1:1 to 1.0:1, preferably in the range of from 0.3:1 to 0.7:1, more preferably in the range of from 0.4:1 to 0.6:1.
52. The process of any one of embodiments 34 to 51, wherein the ratio S2 : S3 of the total volume of the solution S2 to the total volume of the solution S3 which are both fed into the mixture M1 is comprised in the range of from 0.2:1 to 2.0:1, preferably in the range of from 0.7:1 to 1.4:1, more preferably in the range of from 0.8:1 to 1.3:1.
53. The process of any one of embodiments 34 to 52, wherein the ratio M1 : S3 of the total volume of the mixture M1 to the total volume of the solution S3 which is fed into the mixture M1 is comprised in the range of from 1.0:1 to 3.5:1, more preferably in the range of from 1.6:1 to 2.6:1, more preferably in the range of from 1.7:1 to 2.4:1.
54. The process of any one of embodiments 34 to 53, wherein the feeding of the solutions of S2 and S3 into the mixture M1 in (4) is conducted for a duration comprised in the range of from 1 min to 24 h, preferably of from 0.05 to 12 h, more preferably of from 0.1 to 6 h, more preferably of from 0.25 to 3 h, more preferably of from 0.5 to 1.5 h, and more preferably of from 0.75 to 1.25 h.
55. The process of any one of embodiments 34 to 54, wherein the feeding of the solutions S2 and S3 into the mixture M1 in (4) is conducted subsequently or simultaneously, preferably simultaneously.
56. The process of any one of embodiments 34 to 55, wherein the feeding of the solutions S2 and S3 into the mixture M1 in (4) is conducted under agitation of the mixture M1, wherein the agitation of the mixture M1 is preferably achieved by stirring.
57. The process of any one of embodiments 34 to 56, wherein one or more of the mixture M1 and the solutions S2 and S3, are heated prior to the feeding of solutions S2 and S3 into the mixture M1 in (4), wherein one or more of the mixture M1 and the solutions S2 and S3, are preferably heated prior to the feeding of solutions S2 and S3 into the mixture M1 in (4) at a temperature in the range of from 30 to 100 °C, preferably of from 40 to 90 °C, more preferably of from 50 to 80 °C, more preferably of from 55 to 75 °C, and more preferably of from 59 to 71 °C.
58. The process of any one of embodiments 34 to 57, wherein during the feeding in (4) the resulting mixture is heated and/or maintained at a temperature in the range of from 30 to 100 °C, preferably of from 40 to 90 °C, more preferably of from 50 to 80 °C, more preferably of from 55 to 75 °C, and more preferably of from 59 to 71 °C.
59. The process of any one of embodiments 34 to 58, wherein the process further comprises
   (6) washing the hydrogenation catalyst precursor obtained in (5);
      and
   (7) drying the hydrogenation catalyst precursor obtained in (5) or (6).
60. The process of any one of embodiments 34 to 59, wherein the process further comprises
   (8) calcining the hydrogenation catalyst precursor obtained in (5), (6), or (7), to obtain a hydrogenation catalyst precursor,
   wherein preferably from 90 to 100 mol-%, more preferably from 95 to 100 mol-%, more preferably from 99 to 100 mol-%, of the Ni comprised in the hydrogenation catalyst precursor is present as NiO,
   wherein preferably from 90 to 100 mol-%, more preferably from 95 to 100 mol-%, more preferably from 99 to 100 mol-%, of the Al comprised in the hydrogenation catalyst precursor is present as Al₂O₃.
61. The process of any one of embodiments 34 to 60, wherein the process further comprises
   (9) shaping the hydrogenation catalyst precursor obtained in (5), (6), (7), or (8) to obtain a hydrogenation catalyst precursor, wherein shaping preferably comprises extruding and/or tableting.
62. A hydrogenation catalyst precursor obtainable and/or obtained according to the process of any one of embodiments 34 to 61, preferably according to embodiment 59 or 61, more preferably according to embodiment 59.
63. A process for the preparation of a hydrogenation catalyst, comprising
   (i) providing a hydrogenation catalyst precursor according to any one of embodiments 1 to 33 and 62,
   (ii) reducing the hydrogenation catalyst precursor provided in (i) in a gas atmosphere comprising hydrogen, obtaining the hydrogenation catalyst.
64. The process of embodiment 63, wherein reduction in (ii) is conducted at a temperature of the gas atmosphere in the range of from 200 to 500 °C, more preferably in the range of from 300 to 470 °C, more preferably in the range of from 350 to 450 °C, more preferably in the range of from 400 to 440 °C, more preferably in the range of from 420 to 430 °C.
65. The process of embodiment 63 or 64, wherein reduction in (ii) is conducted for a duration in the range of from 0.25 to 5 h, preferably in the range of from 0.5 to 4 h, more preferably in the range of from 1 to 3.5 h, more preferably in the range of from 1.25 to 3 h, more preferably in the range of from 1.5 to 2.5 h, more preferably in the range of from 1.75 to 2.25 h.
66. The process of any one of embodiments 63 to 65, wherein the process further comprises
   (iii) passivating the hydrogenation catalyst obtained in (ii) in a gas atmosphere comprising air.
67. The process of embodiment 66, wherein passivation in (iii) is conducted at a temperature of the gas atmosphere in the range of from 75 to 150 °C, preferably in the range of from 80 to 130 °C, more preferably in the range of from 85 to 120 °C, more preferably in the range of from 90 to 110 °C, more preferably in the range of from 95 to 105 °C.
68. The process of embodiment 66 or 67, wherein passivation in (iii) is conducted for a duration in the range of from 1 to 8 h, preferably in the range of from 2 to 6 h, more preferably in the range of from 3 to 4 h, more preferably in the range o from 3.5 to 4 h.
69. The process of any one of embodiments 63 to 68, wherein the process further comprises (iv) shaping the hydrogenation catalyst obtained in (ii), or (iii) to obtain a hydrogenation catalyst, wherein shaping preferably comprises extruding and/or tableting.
70. A hydrogenation catalyst comprising Ni, Si, Al, and O, obtainable and/or obtained according to the process of any one of embodiments 63 to 69.
71. The hydrogenation catalyst according to embodiment 70, wherein the hydrogenation catalyst exhibits a molar ratio Ni:AI of Ni, calculated as elemental Ni, to Al, calculated as elemental Al, in the range of from 20:1 to 200:1, preferably in the range of from 20:1 to 100:1, more preferably in the range of from 20:1 to 60:1, more preferably in the range of from 22:1 to 55:1, more preferably in the range of from 25:1 to 45:1, more preferably in the range of from 29:1 to 40:1, more preferably in the range of from 30:1 to 37:1, more preferably in the range of from 32:1 to 35:1.
72. The hydrogenation catalyst according to embodiment 70 or 71, wherein the hydrogenation catalyst exhibits a molar ratio Ni:Si of Ni, calculated as elemental Ni, to Si, calculated as elemental Si, in the range of from 0.50:1 to 2.50:1, preferably in the range of from 0.70:1 to 2.00:1, more preferably in the range of from 0.80:1 to 1.50:1, more preferably in the range of from 0.90:1 to 1.20:1, more preferably in the range of from 0.94:1 to 1.10:1, more preferably in the range of from 0.95:1 to 1.00:1.
73. The hydrogenation catalyst according to any one of embodiments 70 to 72, wherein the hydrogenation catalyst exhibits a molar ratio Si:Al of Si, calculated as elemental Si, to Al, calculated as elemental Al, in the range of from 6:1 to 70:1, preferably in the range of from 11:1 to 61:1, more preferably in the range of from 17:1 to 53:1, more preferably in the range of from 26:1 to 45:1, more preferably in the range of from 31:1 to 39:1, more preferably in the range of from 34:1 to 36:1.
74. The hydrogenation catalyst according to any one of embodiments 70 to 73, wherein the Ni is in oxidation state 0 or +2.
75. The hydrogenation catalyst according to any one of embodiments 70 to 74, wherein from 30 to 100 mol-%, preferably from 40 to 100 mol-%, more preferably from 50 to 100 mol-%, of the Ni are in oxidation state 0.
76. The hydrogenation catalyst according to any one of embodiments 70 to 75, wherein from 0 to 50 mol-%, preferably from 10 to 40 mol-%, more preferably from 20 to 30 mol-%, of the Ni are in oxidation state +2.
77. The hydrogenation catalyst according to any one of embodiments 70 to 76, comprising from 38 to 54 weight-%, preferably from 41 to 51 weight-%, more preferably from 43 to 49 weight-%, of Ni, calculated as elemental Ni, based on the weight of the hydrogenation catalyst.
78. The hydrogenation catalyst according to any one of embodiments 70 to 77, comprising from 0.6 to 1.9 weight-%, preferably from 0.9 to 1.6 weight-%, more preferably from 1.1 to 1.4 weight-%, of Al, calculated as Al₂O₃, based on the weight of the hydrogenation catalyst.
79. The hydrogenation catalyst according to any one of embodiments 70 to 78, comprising from 41 to 57 weight-%, preferably from 44 to 54 weight-%, more preferably from 46 to 52 weight-%, of Si, calculated as SiO₂, based on the weight of the hydrogenation catalyst.
80. The hydrogenation catalyst according to any one of embodiments 70 to 79, comprising equal to or less than 1 weight-%, preferably equal to or less than 0.40 weight-%, more preferably equal to or less than 0.20 weight-%, of Na, calculated as elemental Na, based on the weight of the hydrogenation catalyst.
81. The hydrogenation catalyst according to any one of embodiments 70 to 80, being shaped, preferably being in the form of an extrudate or a tablet.
82. A process for the conversion, preferably for one or more of a hydrogenation, a dearomatization, and a desulfurization, of one or more unsaturated compounds, comprising
   (A) providing one or more unsaturated compounds and a hydrogenation catalyst according to any one of embodiments 70 to 81 and/or a hydrogenation catalyst precursor according to any one of embodiments 1 to 33 and 62, in a reaction zone; and
   (B) contacting one or more of the one or more unsaturated compounds and a hydrogenation catalyst according to any one of embodiments 70 to 81 and/or a hydrogenation catalyst precursor according to any one of embodiments 1 to 33 and 62 provided in (A) with hydrogen at a temperature comprised in the range of from 100 to 400 °C.
83. The process of embodiment 82, wherein the one or more unsaturated compounds are selected from the group consisting of polymer compounds, preferably from the group consisting of petrochemical resins, wherein more preferably the one or more unsaturated compounds comprise the polymerization product of the C9 and/or C5 fraction obtained from the distillation of crude naphtha, wherein more preferably the one or more unsaturated compounds comprise one or more of an aldehyde group and a nitro group.
84. The process of embodiment 83, wherein the polymer compounds are obtained from the polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.
85. The process of any one of embodiments 82 to 84, wherein contacting in (B) is conducted at a temperature in the range of from 150 to 350°C, preferably in the range of from 200 to 320°C, more preferably in the range of from 230 to 300°C, more preferably in the range of from 250 to 290°C, more preferably in the range of from 260 to 280°C, more preferably in the range of from 265 to 275°C.
86. The process of any one of embodiments 82 to 85, wherein contacting in (B) is conducted for a duration in the range of from 0.1 to 10 h, preferably in the range of from 0.5 to 5 h , more preferably in the range of from 1 to 3 h, more preferably in the range of from 1.5 to 2.5 h, more preferably in the range of from 1.8 to 2.2 h.
87. The process of any one of embodiments 82 to 86, wherein contacting in (B) is conducted at a pressure in the range of from 5 to 200 bar, preferably in the range of from 10 to 150 bar, more preferably in the range of from 30 to 120 bar, more preferably in the range of from 50 to 100 bar, more preferably in the range of from 70 to 90 bar, more preferably in the range of from 75 to 85 bar.
88. The process of any one of embodiments 82 to 87, wherein contacting in (B) is conducted under agitation, wherein the agitation is preferably achieved by stirring.
89. The process of any one of embodiments 82 to 88, wherein the reaction zone in (A) contains 0.01 to 5 weight-%, preferably 0.05 to 3 weight-%, more preferably 0.1 to 2.5 weight-%, more preferably 0.3 to 2.1 weight-%, more preferably 0.5 to 1.8 weight-%, more preferably 0.7 to 1.5 weight-%, more preferably 0.8 to 1.3 weight-%, more preferably of from 0.9 to 1.1 weight-%, of the hydrogenation catalyst precursor, based on 100 weight-% of the one or more unsaturated compounds.
90. The process of any one of embodiments 82 to 89, wherein the process is a continuous process or a batch process, wherein preferably contacting in (B) is conducted under continuous and/or batch conditions, preferably under batch conditions.
91. The process of any one of embodiments 82 to 90, wherein the hydrogenation catalyst according to any one of embodiments 70 to 80 and/or the hydrogenation catalyst precursor according to any one of embodiments 1 to 33 and 62 is provided in a fixed bed in the reaction zone according to (A).
92. Use of a hydrogenation catalyst precursor according to any one of embodiments 1 to 33 and 62, and/or of a hydrogenation catalyst according to any one of embodiments 70 to 81, in one or more of a dearomatization, a desulfurization, preferably a desulfurization of petrochemical feedstocks, and a hydrogenation, preferably in hydrogenation of one or more unsaturated compounds, preferably of unsaturated polymer compounds, more preferably of petrochemical resins or petrochemical feedstocks, more preferably of unsaturated compounds which comprise a polymerization product of a C9 and/or C5 fraction obtained from distillation of crude naphtha, more preferably of functional groups comprising one or more of an aldehyde group and a nitro group.
93. The use of embodiment 92, wherein the unsaturated polymer compounds are obtained from polymerization of one or more monomers comprising one or more compounds selected from the group consisting of vinyltoluenes, dicyclopentadiene, indene, methylstyrene, styrene, methylindenes, and mixtures of two or more thereof, wherein preferably the one or more monomers comprise one or more vinyltoluenes, dicyclopentadiene, indene, methylstyrene, styrene, and one or more methylindenes.

The present invention is further illustrated by the following reference examples, comparative examples and examples.

### EXAMPLES

### Reference Example 1: Determination of the total intrusion volume via Hg intrusion

The total intrusion volume was determined via intrusion mercury porosimetry according to standard ASTM D 4284-12.

### Reference Example 2: Determination of the total pore volume via N₂ adsorption

The total pore volume is determined by nitrogen adsorption from the BJH method, preferably according to DIN 66134 or ASTM D4641-12.

### Reference Example 3: Determination of the pH

The pH was measured with pH 3310 pH meter from WTW. Prior to each usage, the pH electrode was calibrated at room temperature using standard solutions for calibration with pH = 7 and pH = 10 respectively. The pH of starting solutions was measured at room temperature. To monitor the pH curve during the synthesis, pH was measured continuously, pH values being recorded every minute, at the conditions corresponding to the precipitation conditions (T = 70 °C). The temperature dependence of the pH values is taken into consideration.

### Reference Example 4: Determination of the hydrogen adsorption capacity (HAC)

The hydrogen adsorption capacity (HAC) is a common measure to determine the level of nickel surface area available for catalysis.

The HAC of a catalyst was measured using Autochem 2920 from Micromeritics. For a typical test procedure a sample of 0.1 g catalyst was used. Said sample was activated with hydrogen before the determination of the HAC. The HAC is determined by the amount of hydrogen desorbed while ramping up the temperature from -75 °C to 700 °C with a rate of 10 °C/min under argon atmosphere. The HAC is determined in cm³/g catalyst.

### Reference Example 5: Determination of the peak maximum in the temperature programmed reduction (TPR)

The temperature programmed reduction (TPR) is a well-known technique for the characterization of heterogeneous catalysts to find the most efficient reduction conditions and comprises an oxidized catalyst precursor being submitted to a programmed temperature rise while a reducing gas mixture is flowed over it. A simple container (typically a U-tube) is filled with a solid or catalyst. This sample vessel is positioned in a furnace with temperature control equipment. A thermocouple is placed in the solid for temperature measurement. To remove the present air the container is filled with an inert gas. Flow controllers are used to add hydrogen in an argon mixture. The composition of the gaseous mixture is measured at the exit of the sample container with appropriate detectors. The sample in the furnace is heated up on predefined values. If a reduction takes place at a certain temperature, hydrogen is consumed which is recorded by e.g. thermal conductivity detector (TCD). Such TCD signal is then converted to concentration of active gas using a level calibration. Unless indicated otherwise, in the present description and claims, the above protocol is used to measure the TPR peaks of calcined materials (at 375 °C for 1.5 h) of the present invention, using the following specific settings: concentration of H₂ in Ar: 15 %, ramp rate: 5 °C/min, gas flow: 20 ml/min, and sample size: 0.1 g. The peak maximum indicates the temperature that corresponds to the maximum rate of reduction.

### Reference Example 6: Determination of the loose apparent bulk density

The loose apparent bulk density is the density of a powder, measured in a 100 ml cylindrical measuring flask after 10 minutes settling without any external force. LABD (g/ml) = (G-T)/V, where V is the actual volume of powder after 10 minutes of settling; T is the weight of empty measuring flask; G is the weight of the filled measuring flask.

### Reference Example 7: Determination of a Hazen color

In the context of the present invention, the term "Hazen color" or "APHA color", also referred to as the Hazen scale, and more appropriately as the Platinum Cobalt(Pt/Co) scale, refers to the color standard named for the American Public Health Association and defined by ASTM D1209.

A sample of a resin obtained from a hydrogenation test according to Example 7 for hydrogenation catalysts according to Examples 1-5 and Comparative Examples 1-2 was analyzed with respect to its Hazen color. The Hazen color was calculated from a measurement with a Hach Lange LICO 500 Colorimeter, whereby a 5 cm cuvette was used.

### Example 1: Preparation of a hydrogenation catalyst using porous silica as silicon source

A hydrogenation catalyst was prepared by precipitation. In a 4-liter vessel, 2000 ml water were mixed with 100 g highly porous silica powder having a specific pore volume of 1.7 ml/g (determined by N₂ adsorption) to obtain a silica-containing mixture. For stream 1, 1000 ml of an aqueous solution of Nickel chloride (having a Ni content of 89.9 g/l) were provided. For stream 2, 920 ml of an aqueous solution containing sodium carbonate (220 g/l) and 3.3 g NaAlO₂ were provided.

The silica-containing mixture was heated to a temperature of 60 °C. Streams 1 and 2 were simultaneously pumped within 1 hour into the well-stirred silica-containing mixture whereby the temperature was kept at 60 °C. Thus, the precipitation temperature was 60 °C. The pH of the resulting reaction mixture was 7.5. After 1 hour the precipitation was completed. The resulting solid material was filtered off and washed with approximately 60 I of cold water. Then, the solid material was dried in air overnight in an oven at 110 °C.

The dried solid material had a Ni content of 34.6 weight-%, a Al₂O₃ content of 0.86 weight-%, a SiO₂ content of 35.9 weight-% and a Na content of 0.07 weight-%. Further, the dried solid material had a loose apparent bulk density determined as disclosed herein of 0.46 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 254 m²/g, and a total pore volume of 0.52 cm³/g determined via N₂ adsorption. Further, the calcined solid material had a total intrusion volume of 1.3 cm³/g determined via Hg intrusion, a peak maximum in the temperature programmed reduction at 384 °C, a hydrogen adsorption capacity of 25.9 cm³/g catalyst.

The rest of the dried solid material was activated with hydrogen at 425 °C for two hours. If necessary, the obtained solid material may be passivated.

### Example 2: Preparation of a hydrogenation catalyst using porous silica as silicon source

Example 2 was prepared in accordance with Example 1 whereby the precipitation temperature was set to 70 °C.

The dried solid material had a Ni content of 34.1 weight-%, a Al₂O₃ content of 0.9 weight-%, a SiO₂ content of 36.2 weight-% and a Na content of 0.06 weight-%. Further, the dried solid material had a loose apparent bulk density determined as disclosed herein of 0.38 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 272 m²/g, a total pore volume of 0.51 cm³/g determined via N₂ adsorption. Further, the calcined solid material had a total intrusion volume of 1.3 cm³/g determined via Hg intrusion, a peak maximum in the temperature programmed reduction at 387 °C, a hydrogen adsorption capacity of 24.2 cm³/g catalyst.

The rest of the dried solid material was activated with hydrogen at 425 °C for two hours. If necessary, the obtained solid material may be passivated.

### Example 3: Preparation of a hydrogenation catalyst using porous silica as silicon source

A hydrogenation catalyst was prepared by precipitation. In a 4-liter vessel, 2000 ml water were mixed with 100 g highly porous silica powder having a specific pore volume of 1.7 ml/g to obtain a silica-containing mixture. For stream 1, 1000 ml of an aqueous solution of Nickel chloride (having a Ni content of 89.9 g/l) were provided. For stream 2, 1000 ml of an aqueous solution containing sodium carbonate (204 g/l) and 2.2 g NaAlO₂ were provided.

The silica-containing mixture was heated to a temperature of 70 °C. Streams 1 and 2 were simultaneously pumped within 1 hour into the well-stirred silica-containing mixture whereby the temperature was kept at 70 °C. Thus, the precipitation temperature was 70 °C. The pH of the resulting reaction mixture was 7.5. After 1 hour the precipitation was completed. The resulting solid material was filtered off and washed with approximately 81 I of cold water. Then, the solid material was dried in air overnight in an oven at 110 °C.

The dried solid material had a Ni content of 34.8 weight-%, a Al₂O₃ content of 0.58 weight-%, a SiO₂ content of 36.1 weight-% and a Na content of 0.09 weight-%. Further, the dried solid material had a loose apparent bulk density determined as disclosed herein of 0.4 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 271 m²/g, a total pore volume of 0.55 cm³/g determined via N₂ adsorption. Further, the calcined solid material had a total intrusion volume of 1.3 cm³/g determined via Hg intrusion, a peak maximum in the temperature programmed reduction at 393 °C, a hydrogen adsorption capacity of 27.1 cm³/g catalyst.

The rest of the dried solid material was activated with hydrogen at 425 °C for two hours. If necessary, the obtained solid material may be passivated.

### Example 4: Preparation of a hydrogenation catalyst using porous silica as silicon source

A hydrogenation catalyst was prepared by precipitation. In a 4-liter vessel, 2000 ml water were mixed with 100 g highly porous silica powder having a specific pore volume of 1.7 ml/g to obtain a silica-containing mixture. For stream 1, 1000 ml of an aqueous solution of Nickel chloride (having a Ni content of 89.9 g/l) were provided. For stream 2, 1000 ml of an aqueous solution containing sodium carbonate (208 g/l) and 4.4 g NaAlO₂ were provided.

The silica-containing mixture was heated to a temperature of 70 °C. Streams 1 and 2 were simultaneously pumped within 1 hour into the well-stirred silica-containing mixture whereby the temperature was kept at 70 °C. Thus, the precipitation temperature was 70 °C. The pH of the resulting reaction mixture was 7.5. After 1 hour the precipitation was completed. The resulting solid material was filtered off and washed with approximately 60 I of cold water. Then, the solid material was dried in air overnight in an oven at 110 °C.

The dried solid material had a Ni content of 33.9 weight-%, a Al₂O₃ content of 1.1 weight-%, a SiO₂ content of 35.5 weight-% and a Na content of 0.04 weight-%. Further, the dried solid material had a loose apparent bulk density determined as disclosed herein of 0.56 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 281 m²/g, a total pore volume of 0.44 cm³/g determined via N₂ adsorption. Further, the calcined solid material had a total intrusion volume of 1.2 cm³/g determined via Hg intrusion, a peak maximum in the temperature programmed reduction at 410 °C, a hydrogen adsorption capacity of 24.8 cm³/g catalyst.

The rest of the dried solid material was activated with hydrogen at 425 °C for two hours. If necessary, the obtained solid material may be passivated.

### Example 5: Preparation of a hydrogenation catalyst using porous silica as silicon source

A hydrogenation catalyst was prepared by precipitation. In a 4-liter vessel, 2000 ml water were mixed with 100 g highly porous silica powder having a specific pore volume of 1.7 ml/g to obtain a silica-containing mixture. For stream 1, 1000 ml of an aqueous solution of Nickel chloride (having a Ni content of 89.9 g/l) and further comprising 11.9 g of AlCl₃ were provided. For stream 2, 860 ml of an aqueous solution containing sodium carbonate (200 g/l) were provided.

The silica-containing mixture was heated to a temperature of 70 °C. Streams 1 and 2 were simultaneously pumped within 1 hour into the well-stirred silica-containing mixture whereby the temperature was kept at 70 °C. Thus, the precipitation temperature was 70 °C. The pH of the resulting reaction mixture was 7.5. After 1 hour the precipitation was completed. The resulting solid material was filtered off and washed with approximately 124 l of cold water. Then, the solid material was dried in air overnight in an oven at 110 °C.

The dried solid material had a Ni content of 35.3 weight-%, a Al₂O₃ content of 0.99 weight-%, a SiO₂ content of 37.7 weight-% and a Na content of 0.04 weight-%. Further, the dried solid material had a loose apparent bulk density determined as disclosed herein of 0.42 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 282 m²/g, a total pore volume of 0.45 cm³/g determined via N₂ adsorption. Further, the calcined solid material had a total intrusion volume of 1.1 cm³/g determined via Hg intrusion, a peak maximum in the temperature programmed reduction at 397 °C, a hydrogen adsorption capacity of 23.1 cm³/g catalyst.

The rest of the dried solid material was activated with hydrogen at 425 °C for two hours. If necessary, the obtained solid material may be passivated.

### Example 6: Preparation of a hydrogenation catalyst using porous silica as silicon source

A hydrogenation catalyst was prepared by precipitation. In a 4-liter vessel, 2000 ml water were mixed with 100 g highly porous silica powder having a specific pore volume of 1.7 g/ml and 3.5 g NaAlO₂ to obtain a silica-aluminum-containing mixture. For stream 1, 1000 ml of an aqueous solution of Nickel chloride (having a Ni content of 89.9 g/l) were provided. For stream 2, 995 ml of an aqueous solution containing sodium carbonate (200 g/l) were provided.

The silica-containing mixture was heated to a temperature of 70 °C. Streams 1 and 2 were simultaneously pumped within 1 hour into the well-stirred silica-containing mixture whereby the temperature was kept at 70 °C. Thus, the precipitation temperature was 70 °C. The pH of the resulting reaction mixture was 7.5. After 1 hour the precipitation was completed. The resulting solid material was filtered off and washed with approximately 81 l of cold water. Then, the solid material was dried in air overnight in an oven at 110 °C.

The dried solid material had a Ni content of 34.4 weight-%, a Al₂O₃ content of 0.9 weight-%, a SiO₂ content of 35.3 weight-% and a Na content of 0.14 weight-%. Further, the dried solid material had a loose apparent bulk density determined as disclosed herein of 0.36 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 253 m²/g, a total pore volume of 0.57 cm³/g determined via N₂ adsorption. Further, the calcined solid material had a total intrusion volume of 1.4 cm³/g determined via Hg intrusion, a peak maximum in the temperature programmed reduction at 387 °C, a hydrogen adsorption capacity of 22.2 cm³/g catalyst.

The rest of the dried solid material was activated with hydrogen at 425 °C for two hours. If necessary, the obtained solid material may be passivated.

### Comparative Example 1: Preparation of a hydrogenation catalyst using sodium metasilicate as silicon source

A hydrogenation catalyst was prepared by precipitation. A heel was provided by mixing 1600 ml water with 46.5 g of an aqueous NaAlO₂ solution (having a NaAlO₂ content of 51.6 g per kg solution). The heel was heated to a temperature of 90 °C and stirred at 450 rpm. A stream 1 was provided by preparing a metal precursor solution comprising 132.2 g of NiCl₂, 5.4 g AlCl₃ · 6 H₂O, and 750 ml water. A stream 2 was provided by preparing a support precursor solution comprising 74 g Na₂SiO₃ · 5 H₂O, 102.5 g Na₂CO₃, and 750 ml water. Streams 1 and 2 were added simultaneously to the heel, within a period of 1 hour and at a temperature of the reaction mixture of 90 °C. The final pH of the reaction mixture was in the range of from 7.0 to 8.5.

After 1 hour, the addition of the streams was completed and a slurry was obtained. The total volume of the slurry after the precipitation was 3000 ml. Then, the solid material was filtered off and washed with about 40-60 l of water. The obtained solid material was dried in air overnight at 100 °C. The yield of dried solid material was about 120 g.

The dried solid material had a Ni content of 47.8 weight-%, an Al₂O₃ content of 2.68 weight-%, a SiO₂ content of 16.8 weight-% and a Na content of 0.01 weight-%. Further, the dried solid material had a loose apparent bulk density determined as disclosed herein of 0.15 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 298 m²/g, a total pore volume of 0.71 cm³/g determined via N₂ adsorption. Further, the calcined solid material had a total intrusion volume of 3.19 cm³/g determined via Hg intrusion, a peak maximum in the temperature programmed reduction at 453 °C, a hydrogen adsorption capacity of 24.1 cm³/g catalyst.

The rest of the dried solid material was activated with hydrogen at 425 °C for two hours, and subsequently passivated if necessary.

### Comparative Example 2: Preparation of a hydrogenation catalyst without aluminum

A hydrogenation catalyst was prepared according to Example 3 of US 9045410 B2.

The dried solid material had a Ni content of 33.9 weight-%, a SiO₂ content of 37.3 weight-% and a Na content of 0.06 weight-%. Further, the dried solid material had a loose apparent bulk density determined as disclosed herein of 0.36 kg/I.

A sample of the obtained dried solid material was calcined for 1.5 h at 375 °C in static air (heating ramp 5 °C/min). The calcined solid material was analyzed according to the determination methods as disclosed herein. The calcined solid material had a BET specific surface area of 303 m²/g, a total pore volume of 0.57 cm³/g determined via N₂ adsorption. Further, the calcined solid material had a total intrusion volume of 1.3 cm³/g determined via Hg intrusion, a peak maximum in the temperature programmed reduction at 395 °C, a hydrogen adsorption capacity of 28.2 cm³/g catalyst.

### Comparative Example 3: Preparation of a hydrogenation catalyst using sodium metasilicate as silicon source

A hydrogenation catalyst was prepared according to Example 1 (Reference) of US 9045410 B2.

The dried solid material had a Ni content of 59.1 weight-%, an Al₂O₃ content of 2.4 weight-%, a SiO₂ content of 7.8 weight-% and a Na content of 0.05 weight-%. Further, the dried solid material had a loose apparent bulk density determined as disclosed herein of 0.29 kg/I.

A sample of the calcined solid material was analyzed according to the determination methods as disclosed herein. The calcined solid material had a BET specific surface area of 373 m²/g, a total pore volume of 0.48 cm³/g determined via N₂ adsorption. Further, the calcined solid material had a peak maximum in the temperature programmed reduction at 471 °C, and a hydrogen adsorption capacity of 25.3 cm³/g catalyst.

### Example 7: Catalytic testing

The hydrogenation catalysts of Examples 1-6 and Comparative Examples 1-2 were tested according to following procedure.

Hydrogenation tests were performed in a batch type reactor HP-9 using a high Sulphur C9-resin as feed (Sulphur content was 125 ppm). The activity of the samples was compared against a commercially available Ni 5338 P catalyst. The conditions for a standard test were:
agitation: 1100 rpm;
pressure: 80 bar;
temperature: 270 °C;
feed: 75 g resin / 75 g Exxsol D40;
runtime: 2 hours;
catalyst loading: 1.0 % on dry resin base.

The reaction rate of the catalyst hydrogenating the hydrocarbon resin (RRH) is expressed by the reaction rate constant, which is obtained from performing a linear regression between 0 % and 30 % (and also between 30 and 70%) conversion, and is expressed in 1/ h after 2 hours of hydrogenation. The hydrogenation activity was calculated by normalizing RRH of catalysts by RRH of Comparative Example 1. To allow a better comparison, the activity of the hydrogenation catalyst in accordance with Comparative Example 1 was set to 100 %.

**Table 1**

| Results for catalytic testing in a hydrogenation reaction. | | | |
|---|---|---|---|
| # | Relative activity, k (0-30%) | Relative activity, k (30-70%) | Hazen color |
| | [%] | [%] | |
| Comparative Example 1 | 100 | 100 | 7 |
| Comparative Example 2 | 107 | 70 | 10 |
| Example 1 | 146 | 113 | 6 |
| Example 2 | 141 | 134 | 5 |
| Example 3 | 139 | 132 | 7 |
| Example 4 | 122 | 117 | 7 |
| Example 5 | 111 | 97 | 18 |

As can be seen from the results shown in table 1, it has surprisingly been found that the catalytic activity of the hydrogenation catalysts in accordance with the present invention is higher than that of the comparative examples. Thus, it has been surprisingly found that the hydrogenation catalysts prepared from precursors, and particularly from precursors comprising Al, can achieve an improved catalytic activity.

Further, it can be seen from the results that the resin obtained from the hydrogenation tests using the catalysts of the Examples 1-5 showed a Hazen color in the range of from 5 to 18, similar to that when a catalyst of the Comparative Examples 1-2 was used.

In particular, it can be gathered from the results shown in table 1 that the hydrogenation catalysts according to Examples 1-5 show a higher activity in the hydrogenation reaction according to Example 7 compared to the catalyst precursors according to Comparative Examples 1-2 for reaction rate constant k (0-30%). Also, the catalytic activity was higher for said hydrogenation catalysts than for a catalyst according to Comparative Example 2. Additionally, it was found that the catalytic activity for reaction rate constant k (30-70%) was lower than that for reaction rate constant k (0-30%). This was found for the hydrogenation catalysts in accordance with the present invention as well as for the hydrogenation catalyst in accordance with Comparative Example 2. However, the catalytic activity of the hydrogenation catalysts in accordance with the Example 1-4 was higher than that of the hydrogenation catalyst of Comparative Example 1 indicating an overall improved performance of said catalysts.

### CITED LITERATURE

- US 9045410 B2
- WO 01/36093 A1
- WO 2004/035204 A1
- WO 2015/008247 A2
- WO 2014/128204 A1

## Claims

1. A hydrogenation catalyst precursor comprising Ni, Al, and a support material comprising SiO₂, wherein the Ni is supported on the support material, wherein the hydrogenation catalyst precursor exhibits a peak maximum in the temperature programmed reduction in the range of from 350 to 460 °C.

2. The hydrogenation catalyst precursor according to claim 1, wherein the hydrogenation catalyst precursor exhibits a molar ratio Ni:AI of Ni, calculated as elemental Ni, to Al, calculated as elemental Al, in the range of from 5:1 to 200:1.

3. The hydrogenation catalyst precursor according to claim 1 or 2, wherein the hydrogenation catalyst precursor exhibits a molar ratio Ni:Si of Ni, calculated as elemental Ni, to Si, calculated as elemental Si, in the range of from 0.1:1 to 5.00:1.

4. The hydrogenation catalyst precursor according to any one of claims 1 to 3, wherein the hydrogenation catalyst precursor exhibits a total intrusion volume in the range of from 0.3 to 5.0 cm³/g.

5. The hydrogenation catalyst precursor according to any one of claims 1 to 4, wherein the hydrogenation catalyst precursor exhibits a total pore volume in the range of from 0.20 to 1.50 cm³/g.

6. The hydrogenation catalyst precursor according to any one of claims 1 to 5, wherein the hydrogenation catalyst precursor exhibits a hydrogen adsorption capacity in the range of from 17.0 to 31.0 cm³/g.

7. The hydrogenation catalyst precursor according to any one of claims 1 to 6, comprising from 15 to 60 weight-% of Ni, calculated as elemental Ni, based on the weight of the hydrogenation catalyst precursor.

8. A process for preparation of a hydrogenation catalyst precursor according to any one of claims 1 to 7, the process comprising
(1) preparing a first aqueous mixture (M1) comprising a support material comprising SiO₂;
(2) preparing a second aqueous solution (S2) comprising one or more Ni containing compounds;
(3) preparing a third aqueous solution (S3) comprising one or more bases;
wherein the first aqueous mixture (M1), the second aqueous solution (S2) or the third aqueous solution (S3) comprises one or more Al containing compounds;
(4) feeding solutions S2 and S3 into mixture M1 for supporting Ni and Al on the support material, wherein the resulting mixture has a pH in the range of from 7.1 to 8.4;
(5) isolating the hydrogenation catalyst precursor from the mixture obtained in (4).

9. The process of claim 8, wherein the process further comprises
(6) washing the hydrogenation catalyst precursor obtained in (5);
and
(7) drying the hydrogenation catalyst precursor obtained in (5) or (6).

10. The process of claim 8 or 9, wherein the process further comprises (8) calcining the hydrogenation catalyst precursor obtained in (5), (6), or (7), to obtain the hydrogenation catalyst precursor.

11. A hydrogenation catalyst precursor obtainable and/or obtained according to the process of any one claims 8 to 10.

12. A process for the preparation of a hydrogenation catalyst, comprising
(i) providing a hydrogenation catalyst precursor according to any one of claims 1 to 7 and 11;
(ii) reducing the hydrogenation catalyst precursor provided in (i) in a gas atmosphere comprising hydrogen, obtaining the hydrogenation catalyst.

13. A hydrogenation catalyst comprising Ni, Si, Al, and O, obtainable and/or obtained according to the process of claim 12.

14. A process for the conversion of one or more unsaturated compounds, comprising
(A) providing one or more unsaturated compounds and a hydrogenation catalyst according to claim 13 and/or a hydrogenation catalyst precursor according to any one of claims 1 to 7 and 11; and
(B) contacting the one or more unsaturated compounds and a hydrogenation catalyst provided in (A) with hydrogen at a temperature comprised in the range of from 100 to 400°C.

15. Use of a hydrogenation catalyst precursor according to any one of claims 1 to 7 and 11, and/or of a hydrogenation catalyst according to claim 13, in one or more of a dearomatization, a desulfurization, and a hydrogenation.
